(19) Europäisches Patentamt European Patent Office Office européen des brevets

(11) **EP 2 587 584 B1**

(12) **EUROPEAN PATENT SPECIFICATION**

(45) Date of publication and mention of the grant of the patent:
**18.01.2017 Bulletin 2017/03**

(51) Int Cl.:
***H01M 10/48*** *(2006.01)*     ***G01R 31/36*** *(2006.01)*
***H01M 10/42*** *(2006.01)*

(21) Application number: **12190247.2**

(22) Date of filing: **26.10.2012**

(54) **Temperature detection device and battery pack**

Temperaturdetektionsvorrichtung und Batteriesatz

Dispositif de détection de température et bloc-batterie

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2011 JP 2011237270**

(43) Date of publication of application:
**01.05.2013 Bulletin 2013/18**

(73) Proprietor: **Makita Corporation
Anjo, Aichi 446-8502 (JP)**

(72) Inventor: **Okabayashi, Hisakazu
Anjo, Aichi 446-8502 (JP)**

(74) Representative: **Kramer Barske Schmidtchen
Patentanwälte PartG mbB
European Patent Attorneys
Landsberger Strasse 300
80687 München (DE)**

(56) References cited:
**WO-A1-2007/104325**    **WO-A1-2011/132446**
**WO-A2-2011/004249**    **JP-A- 2000 329 620**
**JP-A- 2006 119 048**    **US-A- 4 703 650**
**US-A- 6 137 269**    **US-A1- 2007 139 017**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

The present invention relates to a temperature detection device as described in claim 1 that detects a temperature inside of a battery pack, and the battery pack including the temperature detection device therein.

A general battery pack for electric power tool using a battery which is repeatedly chargeable (hereinafter, simply referred to as "battery pack"), such as a lithium-ion rechargeable battery, includes a temperature detection element (such as a thermistor, and the like) that detects a temperature inside of the battery pack, as disclosed in Japanese Unexamined Patent Application Publication No. 2000-278878.

Although the battery is a main object of temperature detection in the battery pack, it is considered to be necessary to detect temperatures of items other than the battery, for example, a temperature of a control circuit that controls charge and discharge of the battery. Moreover, as disclosed in Japanese Unexamined Patent Application Publication No. 2001-211559, it is considered to use a plurality of thermistors to detect the temperature of a battery. That is to say, it is possibly considered to provide a plurality of thermistors in the battery pack, depending on a configuration or a function of the battery pack.

WO 2007/104325 A1 relates to an energy-storage element diagnostic circuit for a cell group in a cell composite of an energy-storage element. The diagnostic circuit is connected to voltage terminals of the cell group. A specific voltage level and/or current is impressed upon a diagnostic conductor, which can then be used for the interrogation of at least one monitored operating parameter of the cell group and/or cell composite, if a cell group voltage at the voltage terminals of the cell group exceeds a first threshold level and/or if the cell group voltage fails to reach a second threshold level.

WO 2011/004249 A2 discloses a secondary battery temperature-estimating apparatus in which an alternating current impedance-estimating section estimates an alternating current impedance of the secondary battery based on electric current and voltage detected when a ripple-generating section causes a ripple current to flow in the secondary battery. A temperature-estimating section estimates the temperature of the secondary battery based on the alternating current impedance estimated by the alternating current impedance-estimating section with the use of a relation between the temperature of the secondary battery and the alternating current impedance of the secondary battery at a ripple frequency.

SUMMARY

However, since the thermistor is an electronic component (element), the thermistor itself occupies a certain physical space. In addition, the thermistor obviously requires a lead wire for connection between the thermistor and the control circuit. Therefore, use of the thermistor involves influences such as size increase or cost increase of the battery pack. Such influences become greater as a number of the thermistors increases.

For this reason, it has been desired to minimize use of the thermistor (or to eliminate the thermistor) by a more simple and reasonable method which is different from a temperature detection method using a temperature detection element such as the thermistor, to thereby allow detection of a temperature inside the battery pack.

Specifically, in a case of detecting a temperature of the battery, for example, it has been desired that the temperature of the battery is detected by using a more simple and reasonable method, instead of using the thermistor, thereby achieving simplification in an overall structure of the battery pack and cost reduction in the battery pack.

Moreover, there may be a case in which a temperature detection needs to be performed separately at a plurality of positions; such a case would be, for example, a case where it is desired to separately detect a temperature of the battery and a temperature of a control circuit, or in a case of a battery constituted of a plurality of battery groups, it is desired to separately detect a temperature of each of the battery groups. In the aforementioned cases, it is desired that the temperature of the battery is detected by performing the temperature detection of part of or all of the plurality of positions by using a more simple and reasonable method, instead of using the thermistor, thereby achieving simplification in an overall structure of the battery pack and cost reduction in the battery pack.

In one aspect of the present invention, when detecting a temperature inside of a battery pack, it is desired to detect the temperature by another temperature detection method different from a method of using a dedicated temperature detection element such as a thermistor and the like.

A temperature detection device in one aspect of the present invention is a device that is provided in a battery pack for electric power tool and detects a temperature inside of the battery pack. The temperature detection device includes a signal output circuit and an output signal-based temperature detection unit. The signal output circuit is configured to output an output signal for use other than for indicating an ambient temperature thereof. A state of the output signal changes depending on the ambient temperature. The output signal-based temperature detection unit is configured to detect the temperature inside of the battery pack based on the state of the output signal from the signal output circuit.

In the temperature detection device configured as above, by utilizing a characteristic of the output signal in which the state of the output signal which is for use other than for indicating the ambient temperature changes depending on the ambient temperature, the output signal-based temperature detection unit detects the temperature inside of the battery pack based on the state of the output signal.

Therefore, according to the temperature detection device configured as above, the temperature inside of the battery pack can be detected by another temperature detection method which is different from the method of using the dedicated temperature detection element such as a thermistor and the like. The ambient temperature may include a temperature of the signal output circuit.

If it is necessary to detect respective temperatures of a plurality of positions (for example, two positions) inside the battery pack, a plurality of (for example, two) aforementioned temperature detection devices may be provided separately at the respective positions, thereby detecting the respective temperatures.

The temperature detection device of the present invention further includes in addition to the output signal-based temperature detection unit, a temperature detection signal-based temperature detection unit. The temperature detection signal-based temperature detection unit includes a temperature detection element adapted to output a temperature detection signal indicating an ambient temperature thereof, and is configured to detect the temperature inside of the battery pack based on the temperature detection signal from the temperature detection element.

The temperature detection device configured as above includes two temperature detection units: the output signal-based temperature detection unit that detects a temperature by utilizing a characteristic (temperature characteristic) of the signal output circuit; and the temperature detection signal-based temperature detection unit that detects a temperature based on the temperature detection signal from the temperature detection element. Thus, it is possible to detect temperatures of a plurality of positions inside the battery pack, while suppressing size increase and cost increase of the overall battery pack. The ambient temperature may include a temperature of the temperature detection element.

Specific usage of an output signal-based detected temperature, which is a temperature detected by the output signal-based temperature detection unit, and a temperature detection signal-based detected temperature, which is a temperature detected by the temperature detection signal-based temperature detection unit can be considered in various ways.

For example, the temperature detection device may include a detected temperature-based abnormality determination unit. The detected temperature-based abnormality determination unit is configured to determine that an abnormality occurs in the battery pack when there occurs one of: a case in which at least one of the output signal-based detected temperature and the temperature detection signal-based detected temperature is equal to or greater than a predetermined temperature upper-limit value; and a case in which at least one of the output signal-based detected temperature and the temperature detection signal-based detected temperature is equal to or less than a predetermined temperature lower-limit value which is less than the temperature upper-limit value.

In the temperature detection device configured as above, it becomes possible to, for example, detect that the temperature of the battery exceeds or falls below a rated temperature range, thereby determining that an abnormality occurs in the battery pack, or to detect overheat in circuits and so on other than the battery (e.g., the aforementioned signal output circuit and so on), thereby determining that an abnormality occurs in the battery pack. That is, abnormalities in respective parts in the battery pack can be detected based on the respective detected temperatures.

Moreover, the temperature detection device may include a change rate-based abnormality determination unit. The change rate-based abnormality determination unit is configured to determine that an abnormality occurs in the battery pack when at least one of a change rate of the output signal-based detected temperature and a change rate of the temperature detection signal-based detected temperature is equal to or greater than a predetermined change-rate upper-limit value.

If the at least one of the aforementioned change rates of the detected temperatures is equal to or greater than the change rate upper-limit value, it is expected that the temperature of the battery pack has been rapidly increasing due to some abnormalities. Accordingly, such a rapid increase of the at least one of the aforementioned detected temperatures is detected to determine that an abnormality occurs in the battery pack, thereby making it possible to protect the battery pack from overheat.

Furthermore, the temperature detection device may include a threshold value-based abnormality determination unit. The threshold value-based abnormality determination unit is configured to compare the output signal-based detected temperature with the temperature detection signal-based detected temperature, and determine that an abnormality occurs in at least one of the signal output circuit and the temperature detection element when a difference between the output signal-based detected temperature and the temperature detection signal-based detected temperature is equal to or greater than a predetermined detected-temperature difference threshold value.

According to the temperature detection device configured as above, whether or not an abnormality occurs in the signal output circuit and the temperature detection element can be easily and adequately determined based on the comparison between the aforementioned detected temperatures.

An abnormality in the signal output circuit may mean any abnormalities. The abnormality in the signal output circuit may include any abnormalities, in which a normal output signal cannot be obtained, such as an abnormality of the signal output circuit itself, disconnection or short circuit of a wire connected to the signal output circuit, adherence of foreign substances to a wire, and so on.

An abnormality in the temperature detection element may mean any abnormalities. The abnormality in the temperature detection element may include any abnormalities, in which a normal temperature detection signal cannot be obtained, such as an abnormality of the temperature detection element itself, disconnection or short circuit of a wire connected to the temperature detection element, adherence of foreign substances to a wire, and so on.

Specific methods of abnormality determination by the threshold value-based abnormality determination unit can be considered in various ways. For example, the threshold value-based abnormality determination unit may be configured to determine that an abnormality occurs in the temperature detection element when a difference between the output signal-based detected temperature and the temperature detection signal-based detected temperature is equal to or greater than the detected-temperature difference threshold value.

According to the temperature detection device configured as above, abnormality in the temperature detection element can be easily and adequately determined. Therefore, this temperature detection device is especially useful in the following cases: for example, in a case where importance of the temperature detection signal-based detected temperature is higher than that of the output signal-based detected temperature, or in a case where, although it is basically sufficient to detect the temperature inside of the battery pack by using the temperature detection signal-based temperature detection unit only, it is necessary to detect an abnormality in the temperature detection element.

When at least one of the aforementioned abnormality determination units is provided, the temperature detection device may further include a protection command output unit. The protection command output unit outputs a protection command when any of the aforementioned abnormality determination units determines that an abnormality occurs. The protection command is at least one of a command to protect the battery pack by executing one of limitation and suspension of discharge from the battery pack, and a command to protect the battery pack by executing one of limitation and suspension of charge to the battery pack.

According to the temperature detection device configured as above, if an abnormality arises in the temperature inside of the battery pack during discharge from or charge to the battery pack, the discharge or the charge is limited or suspended. Thereby, the battery pack can be protected from the abnormality associated with the discharge or charge.

The output signal may include signals in various forms, a status of which varies depending on an ambient temperature of the signal output circuit. For example, the output signal may be set such that an output level of the output signal changes at a predetermined timing which changes depending on the ambient temperature of the signal output circuit.

More specifically, the signal output circuit may be configured to, for example, output at least a predetermined pulse signal as the output signal, and the pulse signal may have a characteristic in which a pulse width of the pulse signal changes depending on the ambient temperature of the signal output circuit. In this case, the output signal-based temperature detection unit may be configured to detect the temperature inside of the battery pack based on the pulse width of the pulse signal.

According to the temperature detection device configured as above, the output signal-based temperature detection unit can easily and reliably detect the output signal-based detected temperature based on the pulse width of the pulse signal.

The above-described signal output circuit may be configured in any manner. For example, the signal output circuit may include a clock generation circuit configured to output a clock signal having a predetermined frequency. In this case, the signal output circuit may be configured to output the pulse signal at a timing synchronized with the clock signal from the clock generation circuit. The clock generation circuit may have a characteristic in which the frequency of the clock signal changes depending on a temperature of the clock generation circuit.

If the frequency of the clock signal changes depending on the temperature, the timing of level change (i.e., pulse width) of the aforementioned pulse signal changes depending on the temperature, accordingly. Therefore, if the clock generation circuit is configured in the above-described manner in which the frequency of the clock signal changes depending on the ambient temperature of the signal output circuit, the temperature inside of the battery pack can be detected by effectively using the change in the frequency of the clock signal.

Next, in another aspect of the present invention, a battery pack for electric power tool includes a battery having at least one battery cell and the above-described temperature detection device.

The battery pack configured as above makes it possible to easily and adequately determine an abnormality inside of the battery pack when such an abnormality appears as an abnormality of the temperature. Thus, based on results of such a determination, various protection operations can be performed. Accordingly, a highly reliable battery pack can be provided.

BRIEF DESCRIPTION OF THE DRAWINGS

The invention will now be described below, by way of example, with reference to the accompanying drawings, in which:

FIGS. 1A and 1B are representative views of a battery pack of an embodiment, in which FIG. 1A is a plane view of the battery pack and FIG. 1B is a cross-sectional view taken along line IB-IB in FIG. 1A;

FIG. 2 is a circuit diagram showing a schematic electrical configuration of an overall electric power tool constituted by attaching the battery pack of the embodiment to an electric power tool main body;

FIG. 3 is a circuit diagram showing a schematic electrical configuration of an overall charging system constituted by attaching the battery pack of the embodiment to a battery charger;

FIGS. 4A to 4C are explanatory views illustrating that a state of an output (a pulse width, etc.) of a battery-voltage detection signal, which is outputted by a voltage detection IC in the battery pack, changes depending on a temperature;

FIGS. 5A and 5B are explanatory views representing a temperature characteristic of an electrical signal, in which FIG. 5A is an explanatory view representing a reset pulse width VS temperature characteristic and FIG. 5B is an explanatory view representing a thermistor-detection voltage VS temperature characteristic;

FIG. 6 is an explanatory view illustrating that a diode voltage Vf, which a microcomputer in the battery pack recognizes as a numerical value (AD value), changes in accordance with a power-supply voltage Vdd;

FIGS. 7A and 7B are a flowchart showing a thermistor abnormality determination process executed by the microcomputer in the battery pack;

FIG. 8 is an explanatory view illustrating that an allowable range (a maximum value Tt_max and a minimum value Tt_min) of a thermistor-detection temperature Tt is set based on a IC temperature Tc;

FIGS. 9A and 9B are a flowchart showing a battery temperature abnormality determination process executed by the microcomputer in the battery pack; and

FIGS. 10A and 10B are explanatory views for illustrating a temperature dependence of the diode voltage Vf, in which FIG. 10A is an explanatory view representing a temperature characteristic of the diode voltage Vf and FIG. 10B is an explanatory view representing a temperature characteristic of the diode voltage Vf recognized in a numerical value by the microcomputer in the battery pack.

## DETAILED DESCRIPTION OF THE PREFERRED EMBODIMENTS

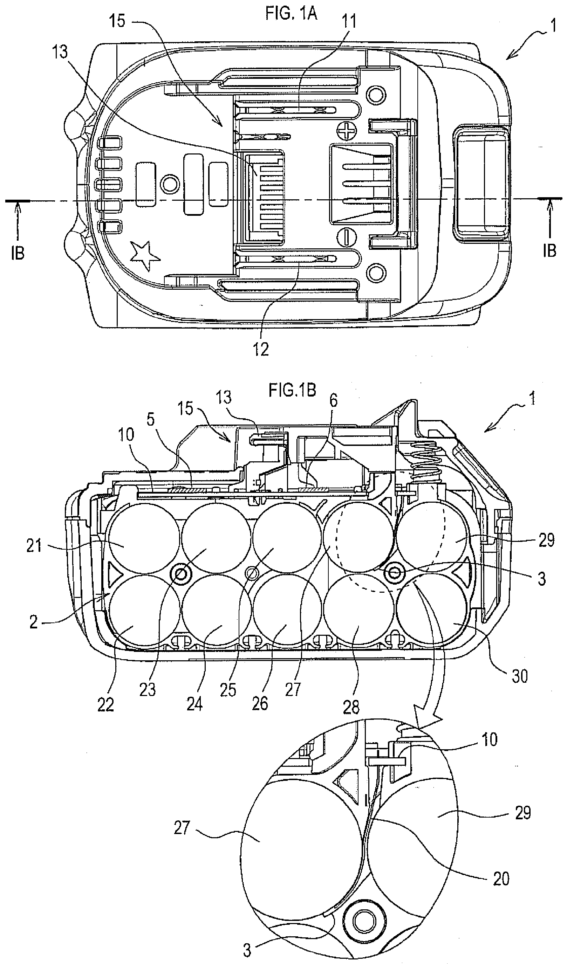

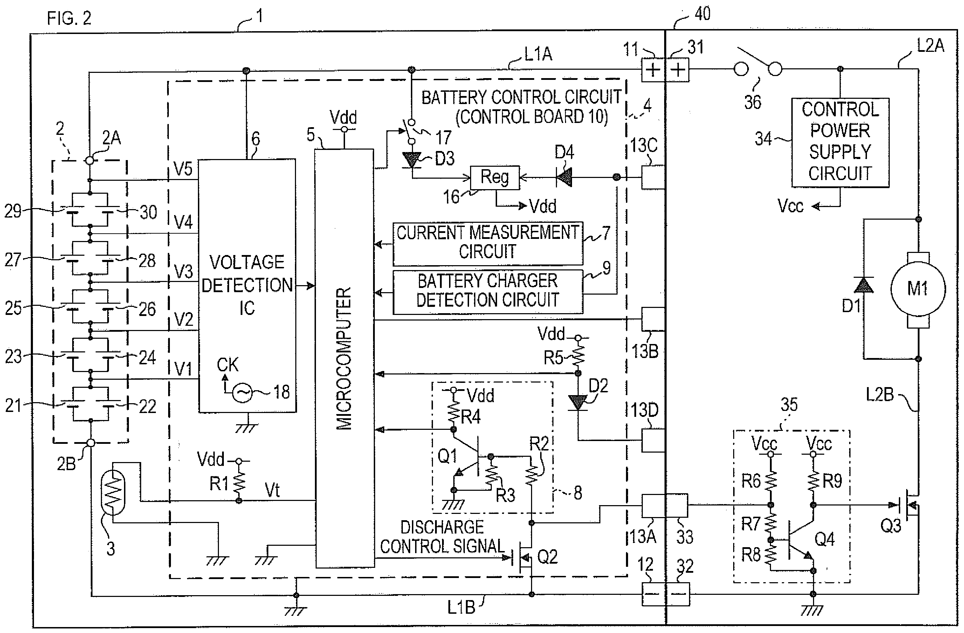

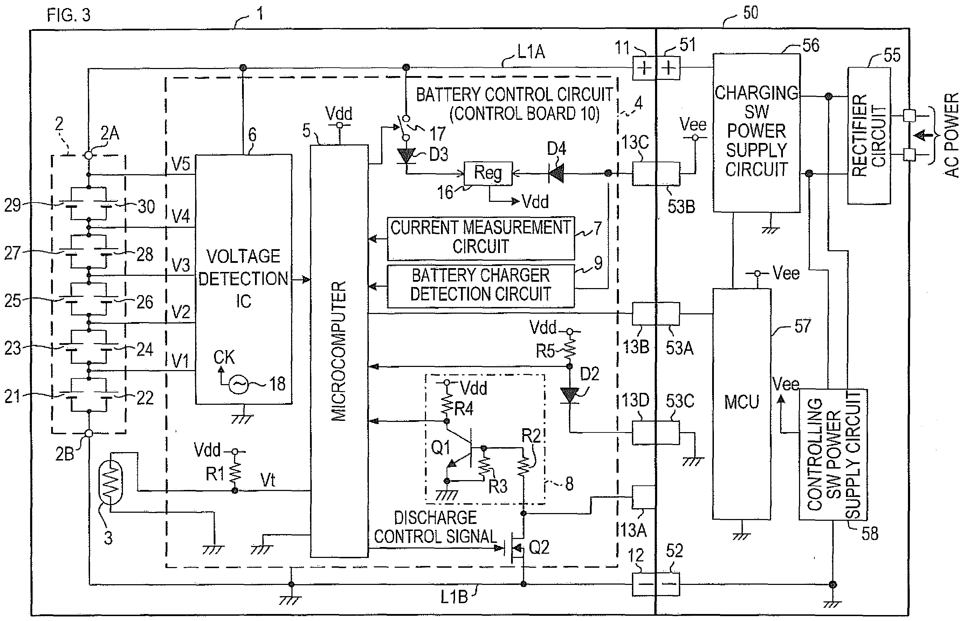

As shown in FIGS. 1A and 1B, a battery pack 1 of the present embodiment is detachably attached to an electric power tool main body (hereinafter, also simply referred to as "main body") 40 (see FIG. 2). The battery pack 1 is configured to supply direct current (DC) power to the main body 40, while being attached to the main body 40. Also, the battery pack 1 is detachably attached to a battery charger 50 (see FIG. 3). The battery pack 1 is configured to be chargeable by the battery charger 50 while being attached to the battery charger 50.

The battery pack 1 is provided with a battery 2 and a control board 10 therein.

The battery 2 includes a plurality of (10 in the present embodiment) battery cells (hereinafter, simply referred to as "cell") 21 to 30. Specifically, as shown in a circuit diagram of FIG. 2, the battery 2 is constituted as follows: two cells are connected in parallel to form a pair of cells, i.e., one "cell group"; five pairs of such cells, i.e., five "cell groups" are connected in series; and thereby, a configuration of five cell groups in series and two cells in parallel is formed.

Each of the cells 21 to 30 in the present embodiment is a lithium-ion rechargeable battery that generates DC voltage of 3.6 V on a standalone basis. Therefore, the battery 2, as a whole, of the present embodiment generates a voltage of DC 18 V (hereinafter, the voltage generated by the battery 2 is referred to as "battery voltage"). In other embodiments, the battery 2 may be configured to generate DC voltages other than DC 18 V.

The control board 10 is disposed above the battery 2. In the control board 10, a battery control circuit 4 (see FIG. 2) is provided mainly on an upper surface thereof (a surface opposite to a surface facing the battery 2). Accordingly, a microcomputer 5 and a voltage detection IC 6 both of which constitute the battery control circuit 4 are mounted on the upper surface of the control board 10.

The battery pack 1 further includes a thermistor 3. In the present embodiment, as shown in FIG. 1B, the thermistor 3 is disposed in contact with a side face of the cell 27 and connected to the control board 10 via the flexible board 20. Therefore, wires for electrical connection between the thermistor 3 and the control board 10 (the battery control circuit 4) are formed in the flexible board 20.

In an upper portion of the battery pack 1, a connector portion 15 is formed. The connector portion 15 is provided for electrical connection to the main body 40 or the battery charger 50. The connector portion 15 is provided with power supply terminal portions (a positive electrode terminal 11 and a negative electrode terminal 12) and a signal terminal portion 13 which are for connection to the battery 2 or the control board 10 in the battery pack 1.

When the battery pack 1 constituted as above is attached to the main body 40, the battery pack 1 is electrically connected to an internal circuit of the main body 40 through the positive electrode terminal 11, the negative electrode terminal 12, and the signal terminal portion 13, to thereby become capable of supplying DC power to the main body 40 or transmitting/receiving various signals (see FIG. 2).

Moreover, when the battery pack 1 is attached to the battery charger 50, the battery pack 1 is electrically connected to an internal circuit of the battery charger 50 through the positive electrode terminal 11, the negative electrode terminal 12, and the signal terminal portion 13, to thereby become capable of receiving DC power for charging from the battery charger 50 or transmitting/receiving various signals (see FIG. 3).

When the battery pack 1 is connected to the main body 40, the battery pack 1 is also electrically connected to the main body 40, as shown in FIG. 2. An electric configuration of the main body 40 and an electric configuration of the battery pack 1 will be explained in detail with reference to FIG. 2.

Firstly, an explanation of the electric configuration of the main body 40 is given. The main body 40 of the present embodiment is configured as a so-called driver drill. In the main body 40, a drill chuck (which is not shown) is rotationally driven by a drive motor M1.

The main body 40 includes a positive electrode terminal 31, a negative electrode terminal 32, and a signal terminal 33. The positive electrode terminal 31 and the negative electrode terminal 32 are to be connected, respectively, to the positive electrode terminal 11 and the negative electrode terminal 12 of the battery pack 1. The signal terminal 33 is to be connected to a signal terminal 13A of the signal terminal portion 13 in the battery pack 1.

The positive electrode terminal 31 is connected to one end of the drive motor M1 through a main switch 36 and a positive power supply line L2A. The negative electrode terminal 32 is connected to the other end of the drive motor M1, through a transistor Q3 for controlling conduction to the drive motor M1 and a negative power supply line L2B.

When the transistor Q3 is turned on by an input signal from the battery pack 1 while the main switch 36 is in an ON state, current-carrying is performed (i.e., DC power is supplied) from the battery pack 1 to the drive motor M1, thereby causing the drive motor M1 to rotate.

A diode (a so-called flywheel diode) D1 is connected to the drive motor M1. The diode D1 is provided to suppress back electromotive force of the drive motor M1 by flowing back, to the positive power supply line L2A, an electric current flowing through the drive motor M1 when the transistor Q3 is turned off. An N-channel MOSFET is used as the transistor Q3.

In the main body 40, a trigger switch (not shown) is provided. The trigger switch is to be operated by a user of the electric power tool to drive or stop the drive motor M1. The main switch 36 is turned on/off in conjunction with the above-described trigger switch. Specifically, the main switch 36 is turned on when the trigger switch is pulled, while the main switch 36 is turned off when the trigger switch is released.

The negative electrode terminal 32 is connected to a ground of the main body 40. When the battery pack 1 is attached to the main body 40, the ground of the main body 40 is connected to a negative power supply line L1B of the battery pack 1 (thus to a negative electrode terminal 2B of the battery 2) through the negative electrode terminal 32.

Also, when the main switch 36 is in an ON state, the positive power supply line L2A is connected to a positive power supply line L1A of the battery pack 1 (thus to a positive electrode terminal 2A of the battery 2) through the positive electrode terminal 31.

The main body 40 also includes a control power supply circuit 34 which generates a power supply voltage Vcc for driving the internal circuit, and an input/output circuit 35 which inputs/outputs signals from/to the battery pack 1.

The control power supply circuit 34 is configured to lower the battery voltage (DC 18 V in the present embodiment) inputted from the positive power supply line L2A to a predetermined constant voltage (for example, DC 5 V), and supply this lowered voltage (DC 5 V) to various internal circuits as the power supply voltage Vcc to activate the internal circuits of the main body 40 when the main switch 36 is in an ON state.

The input/output circuit 35 includes a transistor Q4 and resistors R6, R7, R8, and R9. The transistor Q4 of the present embodiment is an NPN bipolar transistor. A base of the transistor Q4 is connected to the signal terminal 33 through the resistor R7 while being connected to the ground through the resistor R8.

The power supply voltage Vcc is applied to the signal terminal 33 through the resistor R6. The power supply voltage Vcc is also applied to a collector of the transistor Q4 through the resistor R9. The collector of the transistor Q4 is connected to a gate of the transistor Q3. An emitter of the transistor Q4 is connected to the ground.

Resistance values of the resistors R6, R7, and R8 are set such that, when the power supply voltage Vcc has reached a predetermined voltage after the main switch 36 is turned on, the transistor Q4 is turned on to thereby make an electric potential of the signal terminal 33 become a level in a vicinity of the power supply voltage Vcc (i.e., a high level).

When the transistor Q4 is in an ON state, the gate of the transistor Q3 is connected to the ground through the transistor Q4. Thereby, the transistor Q3 is brought into an OFF state and a current-carrying path between the negative electrode terminal 32 and the drive motor M1 is interrupted.

When the electric potential of the signal terminal 33 becomes a level in a vicinity of the ground (i.e., a low level; for example, 0 V), the transistor Q4 is turned off. In this state, the power supply voltage Vcc is applied to the gate of the transistor Q3 through the resistor R9, and thereby, the transistor Q3 is turned on; consequently, the current-carrying path is formed between the negative electrode terminal 32 and the drive motor M1.

Next, explanations will be given with respect to an electric configuration of the battery pack 1.

The battery pack 1 includes: the positive electrode terminal 11 and the negative electrode terminal 12; four signal terminals, i.e., the signal terminals 13A, 13B, 13C, and 13D provided in the signal terminal portion 13; the battery 2; the thermistor 3; and the battery control circuit 4.

The positive electrode terminal 2A of the battery 2 is connected to the positive electrode terminal 11 through the positive power supply line L1A. The negative electrode terminal 2B of the battery 2 is connected to the negative electrode terminal 12 through the negative power supply line L1B.

The signal terminals 13B, 13C, and 13D are provided for respective connections to later-explained signal terminal 53A, 53B, and 53C of the battery charger 50 when the battery pack 1 is attached to the battery charger 50. Each of the signal terminals 13B, 13C, and 13D is in an open state when the battery pack 1 is attached to the main body 40.

The battery control circuit 4 mainly includes the microcomputer 5, the voltage detection IC 6, a current measurement circuit 7, a switch operation detection circuit 8, a battery charger detection circuit 9, a transistor Q2, a control power supply circuit 16, a shutdown switch 17, and a voltage detection diode D2 (hereinafter, simply referred to as "diode D2").

The current measurement circuit 7 detects a current flowing through the positive power supply line L1A or the negative power supply line L1B, and outputs to the microcomputer 5 a current detection signal having a voltage value corresponding to the detected current.

The voltage detection IC 6 measures voltages V1 to V5 of the aforementioned five cell groups constituting the battery 2 in sequence, and periodically outputs to the microcomputer 5 battery-voltage detection signals in a predetermined format including the measured voltages. A battery voltage of the battery 2 is inputted to the voltage detection IC 6. The inputted battery voltage is lowered to a preset power-supply voltage by an internal regulator (not shown) in the voltage detection IC 6. The voltage detection IC 6 is operated with the lowered power-supply voltage as a power source. Here, the above-described configuration of the electric power source in which the battery voltage is lowered by the internal regulator to generate the power-supply voltage is merely one example.

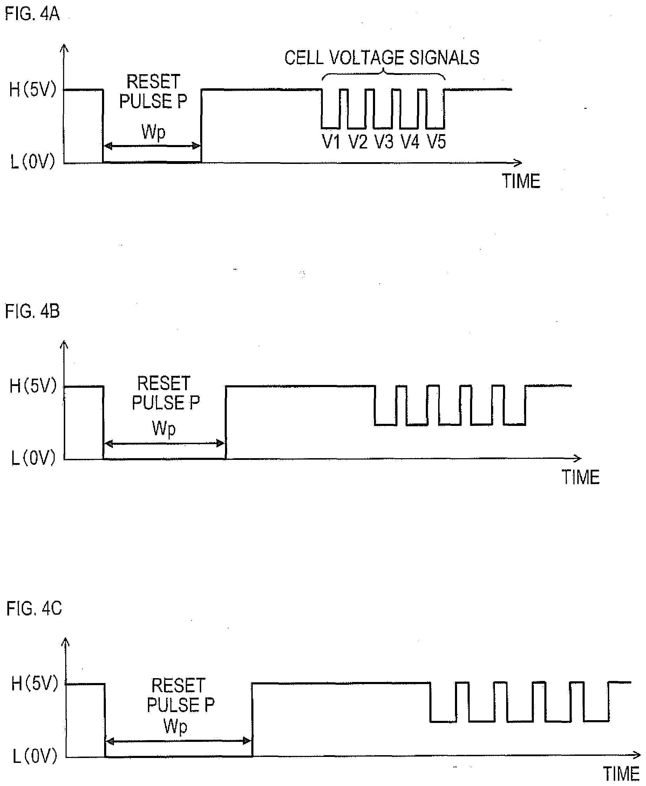

FIGS. 4A to 4C show waveforms of the battery-voltage detection signals outputted from the voltage detection IC 6 to the microcomputer 5.

As shown in FIGS. 4A to 4C, the battery-voltage detection signal includes a reset pulse P having a predetermined pulse width (reset pulse width Wp) and cell voltage signals outputted in sequence at a predetermined timing after output of the reset pulse P.

At a normal time (i.e., at a time when no signals are outputted), a voltage of high level (for example, DC 3.3 V) is outputted from the voltage detection IC 6 to the microcomputer 5. The reset pulse P is a binary signal in which the level of the voltage becomes a low level in the reset pulse width Wp.

On the other hand, the cell voltage signal is not a binary signal, but an analog voltage signal corresponding to a voltage of each of the cell groups. In the present embodiment, one-half of the measured voltage value of each of the cell groups is outputted as the cell voltage signal. The cell voltage signal is outputted in the following order: a first cell voltage V1 which is a voltage of the cell group composed of the cells 21 and 22; a second cell voltage V2 which is a voltage of the cell group composed of the cells 23 and 24; a third cell voltage V3 which is a voltage of the cell group composed of the cells 25 and 26; a fourth cell voltage V4 which is a voltage of the cell group composed of the cells 27 and 28; and a fifth cell voltage V5 which is a voltage of the cell group composed of the cells 29 and 30.

As shown in FIGS. 2 and 3, the voltage detection IC 6 includes an oscillator 18 which generates a clock signal CK. A timing of outputting the battery-voltage detection signal (i.e., a timing of a rise in the reset pulse P, a timing of starting output of the cell voltage signal, and so on) is in synchronization with the clock signal CK.

Specifically, in the present embodiment, the reset pulse width Wp is set to be 158 clocks (i.e., 158 cycles of the clock signal CK). Moreover, not only a time interval from when the reset pulse P is outputted to when output of the cell voltage signal is started, but also an output interval of each of the cell voltages V1 to V5 which constitute the cell voltage signal, is defined by a number of the clock signals CK (a number of clocks). Therefore, if a frequency of the clock signal CK (clock frequency) is constant, the reset pulse width Wp, a timing of output of the cell voltage signal, and the output interval of each of the cell voltages V1 to V5 are always constant.

However, since the oscillator 18 in the present embodiment is configured as a so-called CR oscillator using a resistor and a capacitor, the oscillator 18 is highly dependent on temperature and therefore, the clock frequency changes depending on a temperature inside of the battery pack 1 (specifically, a temperature of the voltage detection IC 6, and more specifically, a temperature of the oscillator 18). For example, the clock frequency is 10 KHz at a temperature of 20°C; however, the clock frequency becomes higher as the temperature exceeds 20°C. On the other hand, the clock frequency becomes lower as the temperature decreases below 20°C.

Therefore, as shown in FIGS. 4A to 4C, the higher the temperature is, the shorter the overall waveform of the battery-voltage detection signal outputted from the voltage detection IC 6 to the microcomputer 5 becomes. For example, when focusing on the reset pulse P, in one example, if the temperature is a medium temperature of 30°C, the reset pulse width Wp is about 15.8 msec as shown in FIG. 4B. Meanwhile, if the temperature is high, for example, 80°C, the reset pulse width Wp becomes shorter such as about 13 msec, as shown in FIG. 4A, due to an increase of the clock frequency. On the other hand, if the temperature is low, for example, minus 30°C, the reset pulse width Wp becomes longer such as about 19 msec, as shown in FIG. 4C, due to a decrease of the clock frequency.

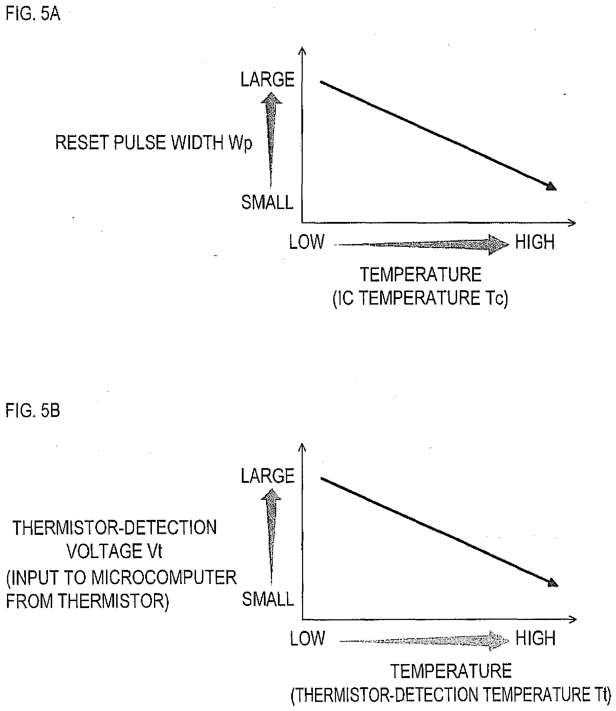

FIG. 5A shows one example of a reset pulse width VS temperature characteristic indicating a relationship between the reset pulse width Wp and the temperature. As shown in FIG. 5A, the reset pulse width Wp decreases substantially in a linear manner as the temperature increases.

In view of the above, in the present embodiment, the microcomputer 5 detects the temperature, as will be described later, based on the reset pulse width Wp of the reset pulse P from the voltage detection IC 6. It can be said that the temperature detected based on the reset pulse width Wp directly represents the temperature of the oscillator 18. Moreover, it can be said that the temperature detected based on the reset pulse width Wp represents, in a broader sense, the temperature of the voltage detection IC 6 and represents, in a yet broader sense, the temperature inside of the battery pack 1. In the following description, therefore, the temperature detected by the microcomputer 5 based on the reset pulse width Wp is referred to as "IC temperature Tc".

The thermistor 3 is provided to detect specifically a temperature of the battery 2 among the temperatures inside of the battery pack 1. The thermistor 3 is provided inside the battery 2 (specifically, on a side surface of the cell 27) as described above. One end of the thermistor 3 is connected to a ground in the battery control circuit 4. The other end of the thermistor 3 is connected to the microcomputer 5 in the battery control circuit 4. Furthermore, the power-supply voltage Vdd is applied to the other end of the thermistor 3 via a resistor R1.

That is, the power-supply voltage Vdd is divided by the thermistor 3 and the resistor R1, and the divided value is inputted to the microcomputer 5 as "thermistor-detection voltage Vt". The thermistor 3 is a known temperature detection element whose resistance value changes depending on temperatures. In the present embodiment, the thermistor 3 is an NTC (Negative Temperature Coefficient) thermistor whose resistance value decreases substantially in a linear manner as the temperature increases. In another embodiment, the thermistor 3 may be a PTC (Positive Temperature Coefficient) thermistor whose resistance value increases substantially in a linear manner as the temperature increases.

FIG. 5B shows one example of a thermistor-detection voltage VS temperature characteristic indicating a relationship between the thermistor-detection voltage Vt from the thermistor 3 and the temperature. Based on the thermistor-detection voltage VS temperature characteristic, the microcomputer 5 calculates a temperature corresponding to the thermistor-detection voltage Vt, as "thermistor-detection temperature Tt".

The thermistor-detection temperature Tt detected by the thermistor 3 directly represents the temperature of the battery 2. Moreover, it can be said that, in a broader sense, the thermistor-detection temperature Tt detected by the thermistor 3 indirectly represents a temperature of the control board 10 in a vicinity of the battery 2, and in a yet broader sense, represents the temperature inside of the battery pack 1.

The switch operation detection circuit 8 detects that the trigger switch (not shown) provided in the main body 40 is operated by the user. The switch operation detection circuit 8 includes a transistor Q1 and resistors R2, R3, and R4. The transistor Q1 is an NPN bipolar transistor. A base of the transistor Q1 is connected to the signal terminal 13A through the resistor R2 while being connected to the ground of the battery pack 1 through the resistor R3. An emitter of the transistor Q1 is connected to the ground.

The ground of the battery pack 1 is connected to the negative power supply line L1B. Therefore, when the battery pack 1 is attached to the main body 40, the ground of the battery pack 1 and the ground of the main body 40 have a same electric potential to each other, and each of these grounds has a same electric potential as a negative electrode of the battery 2.

A collector of the transistor Q1 is connected to the microcomputer 5 and also connected, through the resistor R4, to an output path of the power supply voltage Vdd from the control power supply circuit 16.

The control power supply circuit 16 receives the battery voltage (DC 18 V) from the battery 2 or a power supply voltage Vee (for example, DC 5 V) from the battery charger 50, to generate a constant power supply voltage Vdd (for example, DC 3.3 V). Then, the control power supply circuit 16 performs power supply to various electronic circuits, including the battery control circuit 4, in the battery pack 1. The control power supply circuit 16 is constituted by, for example, a switching power circuit and the like.

The power supply from the battery 2 to the control power supply circuit 16 is performed through the shutdown switch 17 and a back-flow inhibiting diode D3. The power supply from the battery charger 50 to the control power supply circuit 16 is performed through the signal terminal 13C and a back-flow inhibiting diode D4.

When the battery charger 50 is not connected to the control power supply circuit 16, in other words when the power-supply voltage Vee is not supplied to the control power supply circuit 16 from the battery charger 50 via the signal terminal 13C, the control power supply circuit 16 lowers the voltage of the battery 2 to generate the power-supply voltage Vdd.

On the other hand, when the battery charger 50 is connected to the control power supply circuit 16 and the power-supply voltage Vee is supplied to the control power supply circuit 16 from the battery charger 50, the control power supply circuit 16 lowers the supplied power-supply voltage Vee to generate the power-supply voltage Vdd.

The shutdown switch 17 is normally in an ON state. The shutdown switch 17 is turned off in an overdischarge state where the voltage of the battery 2 decreases below a predetermined voltage level.

That is, in the battery control circuit 4, the microcomputer 5 monitors the voltages V1 to V5 of the cell groups constituting the battery 2 or an overall voltage of the battery 2, based on the battery-voltage detection signal from the voltage detection IC 6. Then, in a case where at least one of the voltages V1 to V5 becomes equal to or less than a predetermined cell-voltage threshold value or in a case where the overall voltage of the battery 2 becomes equal to or less than a predetermined battery-voltage threshold value, the battery control circuit 4 determines that the battery 2 is in the overdischarge state, and turns off the shutdown switch 17.

When the shutdown switch 17 is turned off, an electric power from the battery 2 is not supplied to the control power supply circuit 16. Consequently, output of the power-supply voltage Vdd from the control power supply circuit 16 is suspended, and thus, operation of the battery control circuit 4 is suspended. The shutdown switch 17, which has been turned off, is turned on when the battery pack 1 is connected to the battery charger 50, as will be explained later.

The transistor Q2 is an N-channel MOSFET. A drain of the transistor Q2 is connected to the signal terminal 13A. Furthermore, a source of the transistor Q2 is connected to the ground. A gate of the transistor Q2 is connected to the microcomputer 5.

Therefore, the transistor Q2 is turned on/off by an output signal (a discharge control signal, which will be explained later) from the microcomputer 5. When the transistor Q2 is in an OFF state, the signal terminal 13A is in an open state.

Consequently, when the battery pack 1 is attached to the main body 40 and the trigger switch is operated (the main switch 36: ON), if the transistor Q2 is in an OFF state, a high level signal corresponding to the power supply voltage Vcc in the main body 40 is inputted from the signal terminal 33 of the main body 40 to the signal terminal 13A of the battery pack 1. In this case, the transistor Q1 in the switch operation detection circuit 8 is brought into an ON state, and an input signal from the switch operation detection circuit 8 to the microcomputer 5 becomes low level.

Even when the battery pack 1 is attached to the main body 40, if the trigger switch is not operated (the main switch 36: OFF), the electric potential of the signal terminal 33 of the main body 40 is low level (a ground potential); then, the transistor Q1 in the switch operation detection circuit 8 is brought into an OFF state, and the input signal from the switch operation detection circuit 8 to the microcomputer 5 becomes high level.

The battery charger detection circuit 9 is configured in a same manner as the switch operation detection circuit 8. Specifically, the battery charger detection circuit 9 is configured such that when the battery pack 1 is attached to the battery charger 50 and a high level signal (in the present embodiment, the power-supply voltage Vee of DC 5 V) is inputted from the battery charger 50 to the signal terminal 13C, the battery charger detection circuit 9 inputs, to the microcomputer 5, a detection signal indicating that the battery pack 1 is attached to the battery charger 50.

That is, when the signal terminal 13C is in an open state, the battery charger detection circuit 9 inputs a high level signal corresponding to the power supply voltage Vdd to the microcomputer 5 through a pull-up resistor (not shown). When the high level signal is inputted from the battery charger 50 to the signal terminal 13C, a transistor (not shown) connected to a signal path to the microcomputer 5 is brought into an ON state, and this signal path is connected to the ground to make an output to the microcomputer 5 low level.

Accordingly, the microcomputer 5 can detect that the trigger switch has been operated in the main body 40 to which the battery pack 1 is attached, based on the input signal from the switch operation detection circuit 8. Also, the microcomputer 5 can detect that the battery pack 1 has been attached to the battery charger 50 based on the input signal from the battery charger detection circuit 9.

An anode of the diode D2 is connected to the microcomputer 5. A cathode of the diode D2 is connected to the signal terminal 13D. Moreover, the power-supply voltage Vdd is applied to the anode of the diode D2 through a pull-up resistor R5. When the battery pack 1 is connected to the battery charger 50, the cathode of the diode D2 is, as shown in FIG. 3, connected to the ground in the battery charger 50 through the signal terminal 13D and the signal terminal 53C.

For this reason, a forward voltage (hereinafter, referred to as "diode voltage") Vf of the diode D2 is inputted to the microcomputer 5. Here, the ground of the battery pack 1 and the ground of the battery charger 50 are electrically connected to each other through the negative electrode terminal 12 and a negative electrode terminal 52.

When the battery pack 1 is connected to the battery charger 50, the battery pack 1 and the battery charger 50 are also connected electrically to each other, as shown in FIG. 3.

As shown in FIG. 3, the battery charger 50 includes a positive electrode terminal 51, the negative electrode terminal 52, and the signal terminals 53A, 53B, and 53C. The positive electrode terminal 51 and the negative electrode terminal 52 are provided for connecting, respectively, to the positive electrode terminal 11 and the negative electrode terminal 12 of the battery pack 1. The signal terminals 53A, 53B, and 53C are provided for connecting, respectively, to the signal terminals 13B, 13C, and 13D of the battery pack 1.

The battery charger 50 includes a rectifier circuit 55, a charging switching power supply circuit 56, a main control unit (MCU) 57, and a controlling switching power supply circuit 58.

The rectifier circuit 55 rectifies alternate current (AC) power supplied from an AC power source such as a commercial power source. Such a rectified output from the rectifier circuit 55 is outputted to the charging switching power supply circuit 56 and the controlling switching power supply circuit 58.

The charging switching power supply circuit 56 is a switching circuit that performs charging to the battery 2 based on the output from the rectifier circuit 55; the charging switching power supply circuit 56 is drive-controlled by the MCU 57.

The MCU 57 is constituted by a microcomputer, in the same manner as in the microcomputer 5 in the battery pack 1. The MCU 57 acquires a control signal (analog voltage signal) from the microcomputer 5 in the battery control circuit 4 through the signal terminals 13A and 53A and controls patterns of charging to the battery 2 (charge current, charge voltage, etc.) by drive-controlling the charging switching power supply circuit 56 in accordance with the control signal.

The controlling switching power supply circuit 58 generates the power supply voltage Vee (DC 5 V in the present embodiment, as already described above) for operating an internal circuit inside the battery charger 50, such as the MCU 57 and the like.

The ground of the battery charger 50 is connected to the negative electrode terminal 2B of the battery 2, through the negative electrode terminal 52 and the negative electrode terminal 12. A charge voltage generated in the charging switching power supply circuit 56 is applied to the positive electrode terminal 2A of the battery 2, through the positive electrode terminal 51 and the positive electrode terminal 11.

To the signal terminal 53B of the battery charger 50, the power supply voltage Vee generated in the controlling switching power supply circuit 58 is applied.

Accordingly, when the battery pack 1 is attached to the battery charger 50 and the power supply voltage Vee is generated in the controlling switching power supply circuit 58, in the battery pack 1, a high level signal corresponding the power supply voltage Vee is inputted to the battery charger detection circuit 9 through the signal terminals 53B and 13C. Then, a signal level of a detection signal inputted from the battery charger detection circuit 9 to the microcomputer 5 changes from high level to low level.

Next, an explanation will be given about an operation of the microcomputer 5 in the battery pack 1.

The microcomputer 5 monitors detection signals from the switch operation detection circuit 8 and the battery charger detection circuit 9.

For example, when the battery pack 1 is attached to the main body 40, if the detection signal from the switch operation detection circuit 8 becomes low level as a result of operating the trigger switch in the main body 40, the microcomputer 5 makes the discharge control signal high level to turn on the transistor Q2 and allows discharge from the battery 2 to the drive motor M1.

In short, when the transistor Q2 is brought into an ON state, the transistor Q4 in the input/output circuit 35 in the main body 40 is brought into an OFF state and the transistor Q3 provided on the current path to the drive motor M1 is brought into an ON state; consequently, a current flows through the drive motor M1 to rotate the drive motor M1.

When the microcomputer 5 makes the discharge control signal high level as such and allows the discharge from the battery 2 to the drive motor M1 (i.e., during the discharge from the battery 2), the microcomputer 5 executes various protection processes that monitor the battery 2 so as to protect the battery 2 from overdischarge and the like.

In the present embodiment, as the aforementioned various protection processes, a discharge current limitation process, an overdischarge limitation process, and a battery temperature limitation process are performed. These three processes limit the discharge from the battery 2 to the drive motor M1 based on detection results by the voltage detection IC 6, the current measurement circuit 7, and the thermistor 3.

The discharge current limitation process performs various limitations which include, for example, following limitations: it is periodically and cumulatively detected whether or not overcurrent is flowing based on the discharge current detected in the current measurement circuit 7 during the discharge, and if the overcurrent is flowing, it is periodically and cumulatively detected what level the overcurrent is, etc.; then, depending on results of the detection, the discharge is allowed, suspended, or others.

The overdischarge limitation process suspends the discharge from the battery 2 to the drive motor M1 in the following manner: based on the battery voltage detected in the voltage detection IC 6 during the discharge, if at least one cell group of the cell groups has a voltage equal to or less than a preset cell-voltage threshold value or if a voltage of the battery 2 is equal to or less than a preset battery-voltage threshold value, it is determined that the battery 2 is in the overdischarge state; then, the discharge control signal is made low level, thereby suspending the discharge from the battery 2 to the drive motor M1.

Moreover, in the overdischarge limitation process, an above-described process for turning off the shutdown switch 17 is also performed if it is determined that the battery 2 is in the overdischarge state.

As described above, an output state (a timing of level change, etc.) of the battery-voltage detection signal outputted from the voltage detection IC 6 changes depending on a temperature. Therefore, every time the battery-voltage detection signal is inputted to the microcomputer 5 from the voltage detection IC 6, the microcomputer 5 measures the reset pulse width Wp of the reset pulse P, corrects the battery-voltage detection signal based on results of the measurement, and obtain each of the cell voltages V1-V5 of the respective cell groups.

In the battery temperature limitation process, when the battery temperature (the thermistor-detection temperature Tt) detected in the thermistor 3 during the discharge has exceeded a preset threshold value, it is determined that the battery 2 is in an overheat state; then, the discharge control signal is made low level, thereby suspending the discharge from the battery 2 to the drive motor M1.

Since the microcomputer 5 continues to output the discharge control signal (high level) unless it is determined that an abnormality such as overcurrent is occurred in the above-described limitation processes, the microcomputer 5 cannot detect an OFF state of the main switch 36 (in other words, a suspension of operation of the trigger switch) through the switch operation detection circuit 8.

Thus, in the present embodiment, while the discharge control signal is high level, the microcomputer 5 periodically makes the discharge control signal low level for a very short period of time, to monitor the detection signal from the switch operation detection circuit 8 at this low level of the discharge control signal. Thereby, the microcomputer 5 determines an operation state of the main switch 36.

Moreover, for example, when the detection signal from the battery charger detection circuit 9 becomes low level as a result of attachment of the battery pack 1 to the battery charger 50, the microcomputer 5 outputs various information indicating a status (battery voltage, battery capacity, ant the like) of the battery 2 to the MCU 57 of the battery charger 50 through the signal terminals 13B and 53A. Thereafter, when charge from the battery charger 50 to the battery 2 is started, the microcomputer 5 executes a charge control process for battery protection.

When the shutdown switch 17 is turned off, the power-supply voltage Vdd is not supplied to the microcomputer 5, thereby suspending an operation of the microcomputer 5. In this state, if the battery charger 50 is connected to the battery pack 1, the power-supply voltage Vee in the battery charger 50 is supplied to the battery pack 1. Based on the supplied power-supply voltage Vee, the power-supply voltage Vdd is generated to make the microcomputer 5 start operating again. Furthermore, when the microcomputer 5 starts operating again by the supply of the power-supply voltage Vdd, the microcomputer 5 turns on the shutdown switch 17 again.

In the charge control process executed by the microcomputer 5 of the battery pack 1, whether or not an abnormality such as overcharge to the battery 2, overheat of the battery 2 and so on has occurred is determined based on a detection result by the voltage detection IC 6, the current measurement circuit 7, and the thermistor 3; and then, if an abnormality is determined to occur, a command signal to suspend charging or to reduce charge current is transmitted to the battery charger 50 through the signal terminals 13B and 53A.

Moreover, the microcomputer 5 realizes two functions, which will be explained below, based on the diode voltage Vf detected by the diode D2. One of the two functions is to detect an output abnormality of the control power supply circuit 16.

As has been described above, the control power supply circuit 16 lowers the power-supply voltage Vee (DC 5 V) from the battery charger 50 to the power-supply voltage Vdd (DC 3.3 V) when the battery pack 1 is connected to the battery charger 50. However, due to some reasons such as a short circuit in an internal circuit of the control power supply circuit 16, there may be a malfunction in which the power-supply voltage Vee from the battery charger 50 is directly outputted from the control power-supply circuit 16 as the power-supply voltage Vdd without being lowered. That is to say, the power-supply voltage Vdd, which is 3.3 V in a normal state, may become 5 V in an abnormal state.

The microcomputer 5 of the present embodiment recognizes each of the cell voltages V1 to V5 as follows: an "AD value" (a value which has been AD converted) of the cell voltage, which is inputted from the voltage detection IC 6, of each of the cell voltages V1 to V5 is divided by an "AD value" of the power-supply voltage Vdd; and a result of the division is recognized as a cell voltage of each of the cell voltages V1 to V5. In the present embodiment, an AD conversion is performed by, for example, an 8-bit (0-255) AD converter.

For this reason, if an abnormality in which the power-supply voltage Vdd becomes 5 V occurs, the microcomputer 5 erroneously recognizes the cell voltage as having a value lower than an actual value. Since it is not desirable that the cell voltage becomes overvoltage, it is vital to detect the aforementioned malfunction in the control power supply circuit 16. In order to detect the malfunction, the diode D2 is used.

Regardless of whether the power-supply voltage Vdd is 3.3 V or 5 V, the forward voltage (the diode voltage) Vf of the diode D2 is about 0.6 V. Therefore, if the power-supply voltage Vdd from the control power supply circuit 16 is normal and 3.3 V, the diode voltage Vf (0.6 V) inputted to the microcomputer 5 is recognized as a numerical value of "47" by the microcomputer 5. This numerical value is obtained by the following formula (1).

$$(0.6/3.3) \times 256 = 47 \cdots (1)$$

When the microcomputer 5 recognizes the diode voltage Vf as the numerical value of "47", the microcomputer 5 determines that the power-supply voltage Vdd has a normal value without any malfunctions, etc.

However, if the output from the power-supply voltage Vdd becomes 5 V due to a malfunction, etc. in the control power supply circuit 16, the diode voltage Vf (0.6 V) inputted to the microcomputer 5 is recognized as a numerical value of "31" by the microcomputer 5. This numerical value is obtained by the following formula (2).

$$(0.6/5.0) \times 256 = 31 \cdots (2)$$

When the microcomputer 5 recognizes the diode voltage Vf as the numerical value of "31", the microcomputer 5 determines that the power-supply voltage Vdd has an abnormal value due to a malfunction, etc. in the control power supply circuit 16.

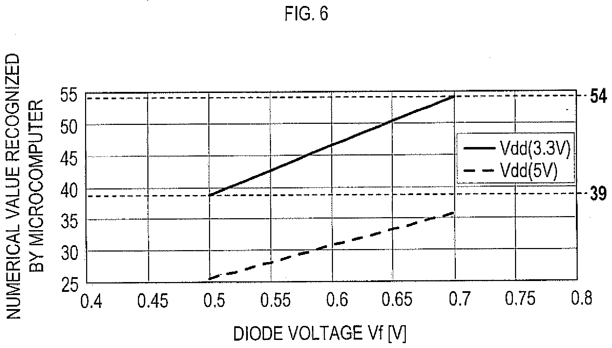

Here, the diode voltage Vf of the diode D2 is normally 0.6 V. However, the diode voltage Vf may vary due to various factors such as individual differences of elements or ambient temperature, etc. If, for example, there is a possibility in which the diode voltage Vf varies in a range of 0.5 V to 0.7 V, the numerical value recognized by the microcomputer 5 would also varies, as illustrated in FIG. 6.

Specifically, if the power-supply voltage Vdd is normal (3.3 V), the numerical value of the diode voltage Vf recognized by the microcomputer 5 varies in a range of "39" to "54". Meanwhile, if the power-supply voltage Vdd is abnormal (for example, 5 V), the numerical value of the diode voltage Vf recognized by the microcomputer 5 varies in a range of "26" to "36".

Therefore, if the numerical value recognized as the diode voltage Vf is in the range of "39" to "54", the microcomputer 5 determines that the power-supply voltage Vdd is normal. On the other hand, if the numerical value recognized as the diode voltage Vf deviates from the range of "39" to "54", the microcomputer 5 determines that the power-supply voltage Vdd is abnormal and that a malfunction occurs. Here, the numerical value recognition of the diode voltage Vf by the microcomputer 5 and a determination of whether or not a malfunction exists based on such a recognized numerical value are performed, for example, when the battery pack 1 is connected to the battery charger 50 (i.e., when this connection is recognized by the microcomputer 5).

The other of the two functions realized by the microcomputer 5 by using the diode D2 is to correct an analog control signal which the microcomputer 5 outputs to the battery charger 50 during charge.

When the battery pack 1 is connected to the battery charger 50, as shown in FIG. 3, the microcomputer 5 of the battery pack 1 and the microcomputer (MCU) 57 of the battery charger 50 are connected to each other via the respective signal terminals 13B and 53A. While the battery charger 50 is connected to the battery pack 1, the microcomputer 5 outputs a control signal for controlling the battery charger 50, to the MCU 57 via the signal terminals 13B and 53A.

However, when charge current is flowing from the battery charger 50 to the battery pack 1, a ground potential of the microcomputer 5 becomes higher than a ground potential of the MCU 57 due to various factors, for example, a contact resistance between the negative electrode terminals 12 and 52. In this case, since such a difference between the aforementioned two ground potentials affects the MCU 57, the MCU 57 may recognize that a value of the control signal outputted from the microcomputer 5 is different from the voltage value outputted from the microcomputer 5.

In other words, for example, in a case where the ground potential of the battery charger 50 is lower by 0.1 V than the ground potential of the battery pack 1 because of flowing of the charge current, if the microcomputer 5 outputs, for example, a voltage of 3 V as the control signal, the MCU 57 may recognize that the control signal has 3.1 V. Therefore, the microcomputer 5 cannot correctly control the battery charger 50.

As described above, the microcomputer 5 detects the IC temperature Tc based on the battery-voltage detection signal from the voltage detection IC 6 (specifically, based on the reset pulse width Wp). In addition, the microcomputer 5 executes a thermistor abnormality determination process. The thermistor abnormality determination process is to determine whether or not a malfunction exists in the thermistor 3 based on the detected IC temperature Tc.

As shown in FIGS. 1A and 1B, the thermistor 3 is provided in the battery 2, and the voltage detection IC 6 is disposed on the control board 10 located at an upper part of the battery 2. Therefore, it is expected that the thermistor-detection temperature Tt detected by the thermistor 3 and the IC temperature Tc detected based on the reset pulse width Wp from the voltage detection IC 6 are not completely the same as each other, but are not greatly different from each other and are relatively closer to each other.

For this reason, if the thermistor-detection temperature Tt is greatly different from the IC temperature Tt, it is considered that the thermistor-detection temperature Tt is abnormal, in other words, the thermistor 3 is in an abnormal state.

Thus, in the present embodiment, it is configured that the microcomputer 5 determines whether or not the thermistor-detection temperature Tt is within a normal range (and therefore, whether or not the thermistor 3 is normal) based on the IC temperature Tc; if the thermistor 3 is abnormal, charge and/or discharge are limited or suspended.

Here, an abnormality in the thermistor 3 does not only mean an abnormality of the thermistor 3 itself. For example, disconnection or short circuit of a wire connecting the thermistor 3 with the control board 10 is also included in the abnormality in the thermistor 3. Furthermore, an abnormality in which a normal detection signal cannot be obtained due to adherence of foreign substances to a wire from the thermistor 3 to the microcomputer 5, and so on is included in the abnormality in the thermistor 3. In short, the abnormality in the thermistor 3 means any abnormalities which causes the correct thermistor-detection voltage corresponding to a temperature not to be inputted from the thermistor 3.

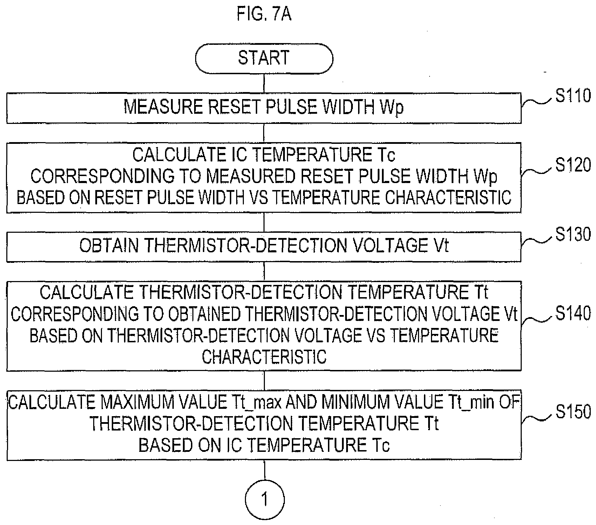

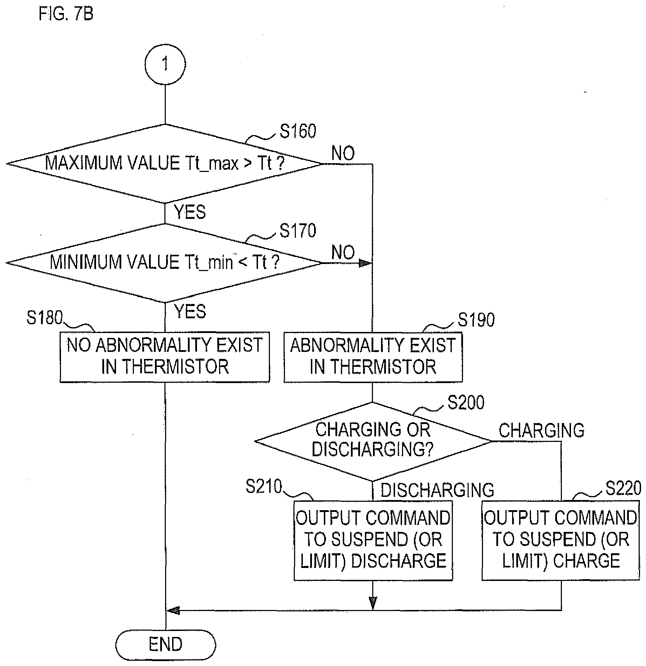

In FIGS. 7A and 7B, the thermistor abnormality determination process executed by the microcomputer 5 is shown.

Every time the reset pulse P is inputted to the microcomputer 5 from the voltage detection IC 6, the input triggers the microcomputer 5 to execute the thermistor abnormality determination process.

When the thermistor abnormality determination process is stared, the microcomputer 5 first measures the reset pulse width Wp of the reset pulse P (S110). Based on the reset pulse width VS temperature characteristic illustrated in FIG. 5A, the IC temperature Tc corresponding to the measured reset pulse width Wp is calculated (S120).

Subsequently, the thermistor-detection voltage Vt is obtained from the thermistor 3 (S130). Then, based on the thermistor voltage VS temperature characteristic illustrated in FIG. 5B, the thermistor-detection temperature Tt corresponding to the obtained thermistor-detection voltage Vt is calculated (S140).

After calculating the IC temperature Tc and the thermistor-detection temperature Tt in the respective manners explained above, a maximum value Tt_max and a minimum value Tt_min in a temperature range which is expected to be the thermistor-detection temperature Tt are calculated (estimated) respectively based on the IC temperature Tc (S150).

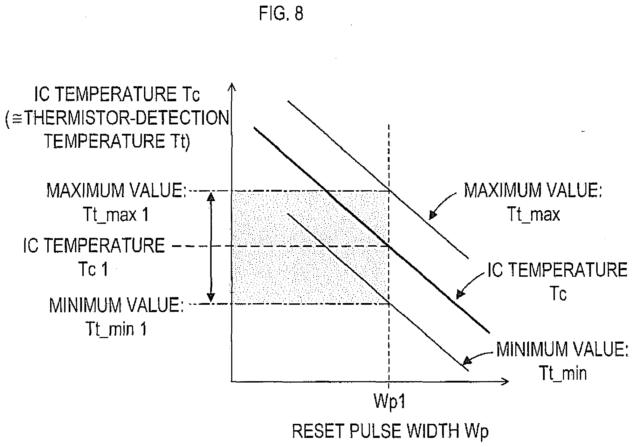

Specifically, as shown in FIG. 8, a map is preset in which respective characteristics of the maximum value Tt_max and the minimum value Tt_min of the expected thermistor-detection temperature Tt are mapped to the characteristic of the IC temperature Tc. For example, if the reset pulse width Wp is "Wp1" and the IC temperature Tc corresponding to Wp1 is "Tc1", the maximum value Tt_max and the minimum value Tt_min corresponding to an IC temperature Tc1 are calculated, respectively, as Tt_max1 and Tt_min1, based on the map.

In this way, the microcomputer 5 calculates the maximum value Tt_max and the minimum value Tt_min corresponding to the IC temperature Tc, by using the map. However, such a calculation using the map is just an example; needless to say, the maximum value Tt_max and the minimum value Tt_min may be calculated by other ways (for example, by a numerical operation, etc.).

After calculating the maximum value Tt_max and the minimum value Tt_min as above, whether or not an abnormality exists in the thermistor 3 is determined by determining whether or not the thermistor-detection temperature Tt falls within a range between the minimum value Tt_min and the maximum value Tt_max.

Specifically, it is firstly determined whether or not the thermistor-detection temperature Tt is less than the maximum value Tt_max (S160). In this case, if the thermistor-detection temperature Tt is less than the maximum value Tt_max (S160: YES), it is subsequently determined whether or not the thermistor-detection temperature Tt is greater than the minimum value Tt_min (S170). If the thermistor-detection temperature Tt is greater than the minimum value Tt_min (S170: YES), the thermistor 3 is determined not to be abnormal (i.e., to be normal)(S180) and the thermistor abnormality determination process is terminated.

On the other hand, if the thermistor-detection temperature Tt is equal to or greater than the maximum value Tt_max (S160: NO) or if the thermistor-detection temperature Tt is equal to or less than the minimum value Tt_min (S170: NO), it is determined that some abnormality exists in the thermistor 3 (S190).

In the above case, it is determined whether discharge from the battery 2 is currently performed or charge to the battery 2 is currently performed (S200). If the discharge is currently performed, a command to suspend (or limit) the discharge is outputted (S210). Specifically, as already described above, the suspension (or limitation) of the discharge is achieved by completely turning off the transistor Q2 or intermittently turning on and off the transistor Q2.

However, if the charge is currently performed, a command to suspend (or limit) the charge is outputted (S220). Specifically, as already described above, the suspension (or limitation) of the charge is achieved by transmitting a command signal to suspend the charge or reduce the charge current, to the battery charger 50 through the signal terminal 13B.

As explained above, in the battery pack 1 of the present embodiment, the microcomputer 5 detects the IC temperature Tc by using a temperature dependence of the battery-voltage detection signal outputted from the voltage detection IC 6 (specifically, a temperature dependence of the reset pulse width Wp). Then, the microcomputer 5 detects whether or not an abnormality exists in the thermistor 3 based on the detected IC temperature Tc. Therefore, in the present embodiment, it is possible to provide the battery pack 1 having a higher liability and capable of detecting whether or not an abnormality exists in the thermistor 3.

Moreover, the IC temperature Tc is detected, not by using an independent temperature-detection element like a thermistor, but by using the voltage detection IC 6 originally provided in the battery pack 1. That is to say, it is not necessary to separately provide a temperature-detection element in order to detect the IC temperature Tc (and therefore, to detect whether or not an abnormality exists in the thermistor 3), and this detection can be achieved by effectively utilizing an already existing configuration.

Furthermore, the detection of the IC temperature Tc is achieved by a simple way in which the detection is performed based on the reset pulse width Wp from the voltage detection IC 6.

Therefore, it is possible to easily and adequately determine whether or not an abnormality exists in the thermistor 3, while suppressing size increase and cost increase of the battery pack 1.

Since the IC temperature Tc is obtained by the calculation based on the reset pulse width Wp, such an obtained temperature may be less accurate than the thermistor-detection temperature Tt obtained by the thermistor 3.

However, if the thermistor 3 is in an abnormal state, the microcomputer 5 cannot detect the abnormal state based on the detection signal (the thermistor-detection voltage Vt) from the thermistor 3. On the other hand, with respect to the voltage detection IC 6, the microcomputer 5 can determine whether or not the voltage detection IC 6 is normal based on a state of the battery-voltage detection signal inputted to the microcomputer 5 (for example, based on whether or not the reset pulse is periodically inputted).

In other words, as long as the battery-voltage detection signal is inputted from the voltage detection IC 6 in a normal way, the voltage detection IC 6 is normal; therefore, the IC temperature Tc based on the reset pulse width Wp is considered to be a reliable value. Accordingly, as long as the voltage detection IC 6 operates normally, whether or not an abnormality exists in the thermistor 3 is reliably determined based on the IC temperature Tc.

Moreover, if an abnormality in the thermistor 3 is detected during charge operation and/or discharge operation, this charge operation and/or discharge operation is to be limited or suspended. Consequently, it is possible to reliably inhibit various abnormal operations inside the battery pack 1, which may be caused by the abnormality in the thermistor 3.

In the present embodiment, the battery pack 1 corresponds to an example of a battery pack of the present invention and the battery control circuit 4 corresponds to an example of a temperature detection device of the present invention.

Specifically, the voltage detection IC 6 corresponds to an example of a signal output circuit of the present invention; the microcomputer 5 corresponds to an example of an output signal-based temperature detection unit of the present invention, an example of a temperature detection signal-based temperature detection unit of the present invention, an example of a threshold value-based abnormality determination unit of the present invention, and an example of a protection command output unit of the present invention; the oscillator 18 corresponds to an example of a clock generation circuit of the present invention; the thermistor 3 corresponds to an example of a temperature detection element of the present invention; each of a difference between the maximum value Tt_max and the IC temperature Tc and a difference between the minimum value Tt_min and the IC temperature Tc, corresponds to an example of a detected-temperature difference threshold value of the present invention.

In the present embodiment, it may be determined in S190 that some abnormality exists in the voltage detection IC 6, if the thermistor-detection temperature Tt is equal to or greater than the maximum value Tt_max (S160: NO) or if the thermistor-detection temperature Tt is equal to or less than the minimum value Tt_min (S170: NO).

[Modified Examples]

Although an embodiment of the present invention has been described above, the present invention should not be limited to the above-described embodiment, but may take various forms within a technical scope of the present invention.

For example, in the above-described embodiment, the microcomputer 5 performs a various protection operations based on the detected temperature by the thermistor 3, and the IC temperature Tc is used only to determine whether or not an abnormality occurs in the thermistor 3; however, such various protection operations may be performed based on the IC temperature Tc.

That is, various control processes may be performed by using, as needed, respective temperatures of two positions, i.e., the IC temperature Tc and the thermistor-detection temperature Tt. Moreover, a number of positions are not limited to the aforementioned two locations but may be any number of positions inside the battery pack 1. In this case, if it is necessary to detect temperatures of a plurality of positions inside the battery pack 1, it is preferable to detect a temperature of at least one of the plurality of positions by not using the thermistor but using a circuit, and the like in which a state of an output signal changes depending on a temperature; such a circuit is, for example, the above-described voltage detection IC 6.

By such a configuration, it becomes possible to detect temperatures of a plurality of positions inside the battery pack 1 while suppressing size increase and cost increase of the overall battery pack 1.

Moreover, it may be configured such that, in a case where the IC temperature Tc and the thermistor-detection temperature Tt are compared with each other and a difference between the IC temperature Tc and the thermistor-detection temperature Tt is equal to or greater than a predetermined detected-temperature difference threshold value, it is determined that at least one of the aforementioned two temperatures is abnormal (i.e., at least one of the voltage detection IC 6 and the thermistor 3 is abnormal).

Furthermore, without using the thermistor 3 (i.e., instead of using the thermistor 3), a temperature inside the battery pack 1 may be monitored based on the IC temperature Tc, so as to perform the various protection operations based on the IC temperature Tc.

The thermistor-detection temperature Tt and the IC temperature Tc can be also used as follows.

For example, a temperature abnormality determination function may be provided, and in this function, when at least one of the thermistor-detection temperature Tt and the IC temperature Tc becomes equal to or greater than a predetermined temperature upper-limit value or becomes equal to or less than a predetermined temperature lower-limit value which is lower than the temperature upper-limit value, an abnormality is determined to occur in the battery pack 1.

Moreover, in addition to (or, instead of) the temperature abnormality determination function, a temperature-change rate abnormality determination function may be provided. In this function, a change rate ΔTt of the thermistor-detection temperature Tt and a change rate ΔTc of the IC temperature Tc are calculated, and when at least one of the two change rates $\Delta Tt$ and $\Delta Tc$ becomes equal to or greater than a predetermined change rate upper-limit value, an abnormality is determined to occur in the battery pack 1.

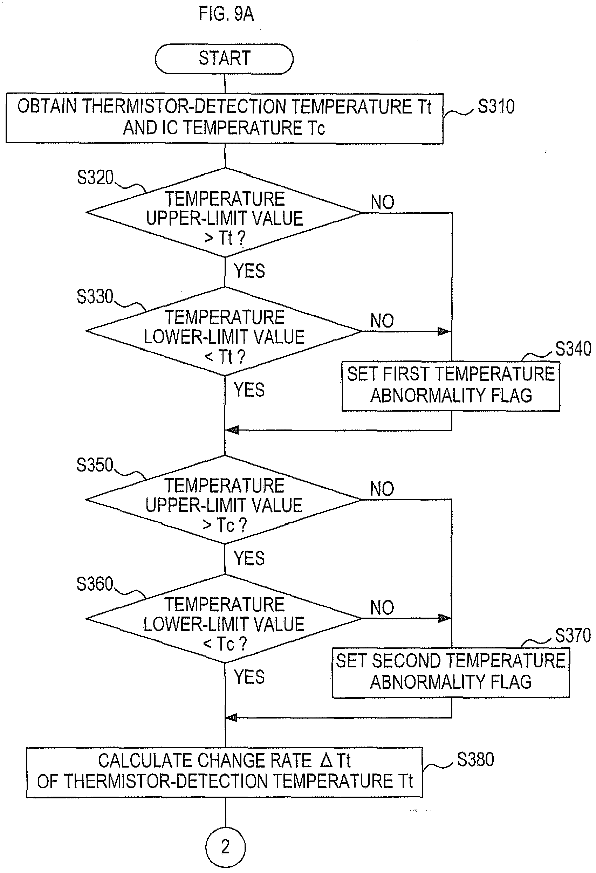

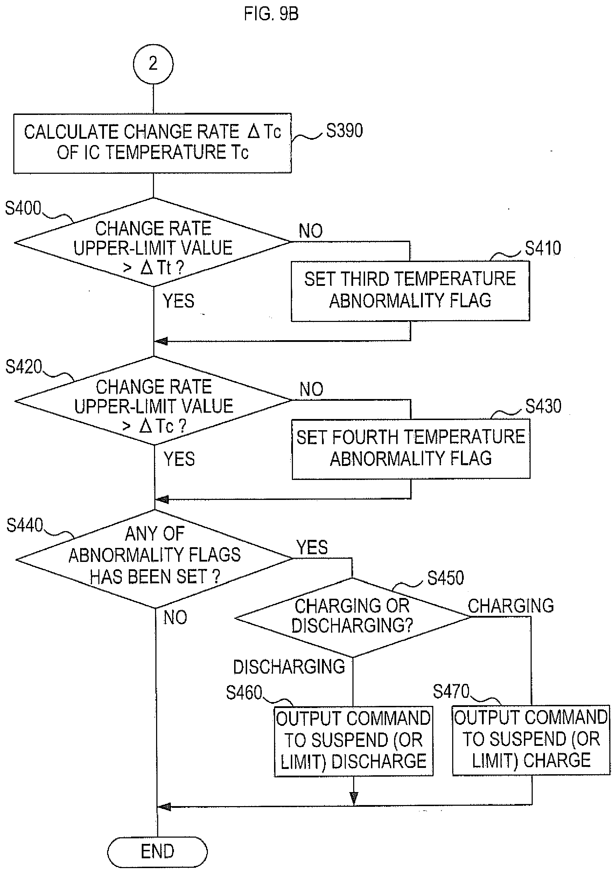

FIGS. 9A and 9B show one example of a battery temperature abnormality determination process executed by a microcomputer in a battery pack provided with the temperature abnormality determination function and the temperature-change rate abnormality determination function. The microcomputer in the battery pack can periodically execute the battery temperature abnormality determination process, for example, in parallel to the thermistor abnormality determination process in FIGS. 7A and 7B.

When the microcomputer in the battery pack starts the battery temperature abnormality determination process in FIGS. 9A and 9B, firstly, the thermistor-detection temperature Tt and the IC temperature Tc are obtained (S310). Specifically, the thermistor-detection temperature Tt and the IC temperature Tc can be obtained, for example, by calculation in the same procedures as those in S110 to S140 in the thermistor abnormality determination process in FIGS. 7A and 7B.

The microcomputer 5 determines whether or not the obtained thermistor-detection temperature Tt is less than a predetermined temperature upper-limit value (S320), and then whether or not the obtained thermistor-detection temperature Tt is greater than a predetermined temperature lower-limit value (S330). In this case, if the thermistor-detection temperature Tt is equal to or greater than the temperature upper-limit value (S320: NO), or equal to or less than the temperature lower-limit value (S330: NO), a first temperature abnormality flag is set (S340).

If affirmative determinations are made in both of S320 and S330 or after the first temperature abnormality flag has been set in S340, the microcomputer 5 determines whether or not the obtained IC temperature Tc is below the predetermined temperature upper-limit value (S350), and then, whether or not the obtained IC temperature Tc is greater than the predetermined temperature lower-limit value (S360).

In this case, if the IC temperature Tc is equal to or greater than the temperature upper-limit value (S350: NO) or if the IC temperature Tc is equal to or less than the temperature lower-limit value (S360: NO), a second temperature abnormality flag is set (S370).

If affirmative determinations are made in both of S350 and S360 or after the second temperature abnormality flag has been set in S370, the microcomputer 5 calculates a change rate $\Delta Tt$ of the thermistor-detection temperature Tt (S380) and a change rate $\Delta Tc$ of the IC temperature Tc (S390). These change rates $\Delta Tt$ and $\Delta Tc$ can be calculated, for example, by calculating a rate of change (difference) from the temperatures Tt and Tc obtained in S310 during previous execution of the battery temperature abnormality determination process, to the temperatures Tt and Tc obtained in the battery temperature abnormality determination process this time.

Then, the microcomputer 5 determines whether or not the change rate $\Delta Tt$ of the thermistor-detection temperature Tt is less than a predetermined change rate upper-limit value (S400). If the change rate $\Delta Tt$ is equal to or greater than the change rate upper-limit value (S400: NO), the microcomputer 5 sets a third temperature abnormality flag (S410).

If affirmative determination is made in S400 or after the third temperature abnormality flag has been set in S410, the microcomputer 5 determines whether or not the change rate $\Delta Tc$ of the IC temperature Tc is less than the predetermined change rate upper-limit value (S420).

If the change rate $\Delta Tc$ is equal to or greater than the change rate upper-limit value (S420: NO), the microcomputer 5 sets a fourth temperature abnormality flag (S430).

Then, the microcomputer 5 determines whether or not at least one of the aforementioned four abnormality flags has been set (S440). If any of the four abnormality flags has not been set (S440: NO), the microcomputer 5 terminates the battery temperature abnormality determination process. On the other hand, if any of the four abnormality flags has been set, the microcomputer 5 proceeds to the subsequent S450 onwards, and to suspend or limit corresponding operations of charge or discharge depending on whether the charge to the battery 2 or the discharge from the battery 2 is performed. The processes in S450 onwards are the same as those in S200 onwards in the thermistor abnormality determination process in FIGS. 7A and 7B.

The microcomputer 5 executes the battery temperature abnormality determination process in FIGS. 9A and 9B in the above-explained manner. Thereby, the following abnormality detection becomes possible: for example, if the temperature of the battery 2 exceeds or falls below a rated temperature range, an abnormality is determined to exist by detecting such an excess or such a fall; also, an abnormality is determined to exist by detecting overheat in other circuits (e.g., the battery control circuit 4, etc.) than the battery 2. In a case that the abnormality is determined to exist, if the charge to the battery 2 or the discharge from the battery 2 is performed, the discharge or charge may be suspended or limited.

In a case where the change rate of each of the temperatures is equal to or greater than the corresponding change rate upper-limit value, it is expected that the temperature has been rapidly increasing due to some abnormalities. Therefore, if the temperature has been rapidly increasing, such a rapid increase is detected to determine that an abnormality exists, to suspend or limit the discharge operation or the charge operation. Thereby, it becomes possible to protect the battery pack 1 from overheat. In this case, the microcomputer 5 corresponds to an example of a detected temperature-based abnormality determination unit of the present invention, an example of a change rate-based abnormality determination unit of the present invention, and an example of a protection command output unit of the present invention.

In the above-described embodiment, whether or not an abnormality exists in the thermistor 3 is detected based on the IC temperature Tc. However, in addition to (or instead of) the IC temperature Tc, the detection may be performed based on a temperature of the diode D2.

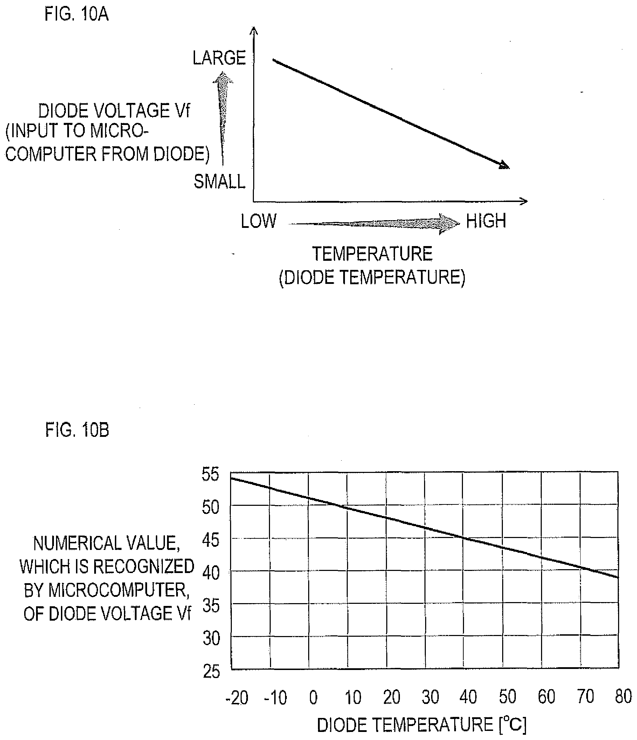

The diode voltage (forward voltage) Vf of the diode D2 has a temperature dependence, as in the case of the reset pulse width Wp. As illustrated in FIG. 10A, the diode voltage Vf changes substantially in a linearly manner in accordance with the temperature (diode temperature) of the diode D2 itself. Specifically, as the diode temperature becomes higher, the diode voltage Vf becomes smaller. Accordingly, the numerical value (AD value) of the diode voltage Vf, which is to be recognized by the microcomputer 5, changes in accordance with the diode temperature, as shown in FIG. 10B.

As above, by utilizing the temperature dependence of the diode voltage Vf, the diode temperature is estimated from the diode voltage Vf; based on the estimated diode temperature, it is possible to detect whether or not an abnormality exists in the thermistor.

Specifically, the aforementioned abnormality detection of whether or not an abnormality exists in the output voltage (the power-supply voltage Vdd) of the control power supply circuit 16 based on the diode voltage Vf, is firstly executed.

If the power-supply voltage Vdd is determined to be normal, the diode temperature is estimated based on the diode voltage Vf at a time of this determination. The estimated diode temperature is compared with the thermistor-detection temperature Tt. If a difference between the estimated diode temperature and the thermistor-detection temperature Tt is within a predetermined range, it can be determined that the thermistor 3 is normal. On the other hand, the difference goes beyond the predetermined range, it can be determined that the thermistor 3 is abnormal.

The abnormality detection of the thermistor 3 based on the diode voltage Vf can be performed by utilizing circuits and the like originally provided in the battery pack 1, in other words, the originally provided diode D2, as in the case of the abnormality detection based on the reset pulse width Wp. Thus, it is possible to easily and adequately determine whether or not an abnormality exists in the thermistor 3 while suppressing size increase and cost increase of the battery pack 1. Thereby, a higher functionality of the battery pack 1 can be achieved.

Moreover, in the above-described embodiment, the description has been given regarding a case where the battery 2 is the lithium-ion rechargeable battery. However, this is just one example, and the battery 2 may be other rechargeable batteries for example, a nickel -hydride rechargeable battery, a nickel-cadmium rechargeable battery or the like.

Furthermore, in the above-described embodiment, the description has been given with respect to the driver drill as the electric power tool main body 40 to which the battery pack 1 is connected. However, the present invention may be applied to any electric power tool other than a driver drill.

In the electric power tool main body 40 of the above-described embodiment, a brushed DC motor is employed as the drive motor M1. However, a brushless DC motor or an AC motor may be employed as the drive motor M1.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A temperature detection device (4) provided in a battery pack (1) for an electric power tool and configured to detect a temperature inside of the battery pack (1), the temperature detection device comprising:

   a signal output circuit (6, D2) configured to output an output signal for use other than for indicating an ambient temperature thereof, the output signal being a signal that changes a state of the output signal depending on the ambient temperature;
   an output signal-based temperature detection unit (5) configured to detect the temperature inside of the battery pack (1) based on the state of the output signal from the signal output circuit (6, D2); and

   **characterised in that** it also comprises a temperature detection signal-based temperature detection unit (5) which includes a temperature detection element (3) adapted to output a temperature detection signal indicating an ambient temperature thereof, and which is configured to detect the temperature inside of the battery pack (1) based on the temperature detection signal from the temperature detection element (3).

2. The temperature detection device (4) according to claim 1, further comprising a detected temperature-based abnormality determination unit (5) configured to determine that an abnormality occurs in the battery pack (1) when there occurs at least one of:

   a case in which at least one of an output signal-based detected temperature, which is a temperature detected by the output signal-based temperature detection unit (5), and a temperature detection signal-based detected temperature, which is a temperature detected by the temperature detection signal-based temperature detection unit (5), is equal to or greater than a predetermined temperature upper-limit value; and a case in which at least one of the output signal-based detected temperature and the temperature detection signal-based detected temperature is equal to or less than a predetermined temperature lower-limit value which is less than the temperature upper-limit value.

3. The temperature detection device (4) according to claim 1 or 2, further comprising a change rate-based abnormality determination unit (5) configured to determine that an abnormality occurs in the battery pack (1) when at least one of a change rate of an output signal-based detected temperature, which is a temperature detected by the output signal-based temperature detection unit (5), and a change rate of a temperature detection signal-based detected temperature, which is a temperature detected by the temperature detection signal-based temperature detection unit (5), is equal to or greater than a predetermined change-rate upper-limit value.

4. The temperature detection device (4) according to any one of claims 1 to 3, further comprising a threshold value-based abnormality determination unit (5) configured to compare an output signal-based detected temperature, which is a temperature detected by the output signal-based temperature detection unit (5), with a temperature detection signal-based detected temperature, which is a temperature detected by the temperature detection signal-based temperature detection unit (5), and determine that an abnormality occurs in at least one of the signal output circuit (5) and the temperature detection element (3) when a difference between the output signal-based detected temperature and the temperature detection signal-based detected temperature is equal to or greater than a predetermined detected-temperature difference threshold value.

5. The temperature detection device (4) according to claim 4, wherein the threshold value-based abnormality determination unit (5) is configured to determine that an abnormality occurs in the temperature detection element (3) when the difference between the output signal-based detected temperature and the temperature detection signal-based detected temperature is equal to or greater than the detected-temperature difference threshold value.

6. The temperature detection device (4) according to any one of claims 2 to 5, further comprising a protection command output unit (5) configured to output a protection command when the detected temperature-based abnormality determination unit (5) determines that the abnormality occurs, the protection command being at least one of a command to protect the battery pack (1) by executing one of limitation and suspension of discharge from the battery pack (1), and a command to protect the battery pack (1) by executing one of limitation and suspension of charge to the battery pack (1).

7. The temperature detection device (4) according to any one of claims 3 to 5, further comprising a protection command output unit (5) configured to output a protection command when the change rate-based abnormality determination unit (5) determines that the abnormality occurs, the protection command being at least one of a command to protect the battery pack (1) by executing one of limitation and suspension of discharge from the battery pack (1), and a command to protect the battery pack (1) by executing one of limitation and suspension of charge to the battery pack (1).

8. The temperature detection device (4) according to claim 4 or 5, further comprising a protection command output unit (5) configured to output a protection command when the threshold value-based abnormality determination unit (5) determines that the abnormality occurs, the protection command being at least one of a command to protect the battery pack (1) by executing one of limitation and suspension of discharge from the battery pack (1), and a command to protect the battery pack (1) by executing one of limitation and suspension of charge to the battery pack (1).

9. The temperature detection device (4) according to any one of claims 1 to 8, wherein the output signal is set such that an output level of the output signal changes at a predetermined timing which changes depending on the ambient temperature of the signal output circuit (6).

10. The temperature detection device (4) according to claim 9, wherein the signal output circuit (6) is configured to output at least a predetermined pulse signal as the output signal, wherein the pulse signal has a characteristic in which a pulse width of the pulse signal changes depending on the ambient temperature of the signal output circuit (6), and wherein the output signal-based temperature detection unit (5) is configured to detect the temperature inside of the battery pack (1) based on the pulse width of the pulse signal.

**11.** The temperature detection device (4) according to claim 10,
wherein the signal output circuit (6) comprises a clock generation circuit (18) configured to output a clock signal having a predetermined frequency,
wherein the signal output circuit (6) is configured to output the pulse signal at a timing synchronized with the clock signal from the clock generation circuit (18), and
wherein the clock generation circuit (18) has a characteristic in which the frequency of the clock signal changes depending on a temperature of the clock generation circuit (18).

**12.** A battery pack (1) for an electric power tool comprising:

a battery (2) having at least one battery cell (21 to 30); and

the temperature detection device (4) according to any one of claims 1 to 11.

**Patentansprüche**

**1.** Temperaturdetektionsvorrichtung (4), die in einem Batteriepack (1) für ein elektrisches Kraftwerkzeug vorgesehen ist und zum Detektieren einer Temperatur im Inneren des Batteriepacks (1) ausgebildet ist, wobei die Temperaturdetektionsvorrichtung aufweist:

eine Signalausgabeschaltung (6, D2), die zum Ausgeben eines Ausgabesignals für eine andere Verwendung als zum Angeben einer Umgebungstemperatur derselben ausgebildet ist, wobei das Ausgabesignal ein Signal ist, das in Abhängigkeit von der Umgebungstemperatur einen Zustand des Ausgabesignals ändert;
eine ausgabesignalbasierte Temperaturdetektionseinheit (5), die zum Detektieren der Temperatur im Inneren des Batteriepacks (1) basierend auf dem Zustand des Ausgabesignals von der Signalausgabeschaltung (6, D2) ausgebildet ist; und

**dadurch gekennzeichnet, dass** sie ferner eine temperaturdetektionssignalbasierte Temperaturdetektionseinheit (5) aufweist, die ein Temperaturdetektionselement (3) aufweist, das zum Ausgeben eines Temperaturdetektionssignals angepasst ist, das eine Umgebungstemperatur desselben angibt, und die zum Detektieren der Temperatur im Inneren des Batteriepacks (1) basierend auf dem Temperaturdetektionssignal von dem Temperaturdetektionselement (3) ausgebildet ist.

**2.** Temperaturdetektionsvorrichtung (4) nach Anspruch 1, ferner mit einer detektionstemperaturbasierten Abnormalitätsbestimmungseinheit (5), die dazu ausgebildet ist, zu bestimmen, dass in dem Batteriepack (1) eine Abnormalität auftritt, wenn mindestens einer der folgenden Fälle auftritt:

ein Fall, in dem mindestens eine ausgabesignalbasierte detektierte Temperatur, die eine Temperatur ist, die von der ausgabesignalbasierten Temperaturdetektionseinheit (5) detektiert wird, oder eine temperaturdetektionssignalbasierte detektierte Temperatur, die eine Temperatur ist, die von der temperaturdetektionssignalbasierten Temperaturdetektionseinheit (5) detektiert wird, größer oder gleich einem vorbestimmten oberen Temperaturgrenzwert ist; und
ein Fall, in dem mindestens die ausgabesignalbasierte detektierte Temperatur oder die temperaturdetektionssignalbasierte detektierte Temperatur kleiner oder gleich einem vorbestimmten unteren Temperaturgrenzwert ist, der kleiner als der obere Temperaturgrenzwert ist.

**3.** Temperaturdetektionsvorrichtung (4) nach Anspruch 1 oder 2, ferner mit einer änderungsratenbasierten Abnormalitätsbestimmungseinheit (5), die zum Bestimmen, dass in dem Batteriepack (1) eine Abnormalität auftritt, wenn mindestens eine Änderungsrate einer ausgabesignalbasierten detektierten Temperatur, die eine Temperatur ist, die von der ausgabesignalbasierten Temperaturdetektionseinheit (5) detektiert wird, oder eine Änderungsrate einer temperaturdetektionssignalbasierten detektierten Temperatur, die eine Temperatur ist, die von der temperaturdetektionssignalbasierten Temperaturdetektionseinheit (5) detektiert wird, größer oder gleich einem vorbestimmten oberen Änderungsratengrenzwert ist, ausgebildet ist.

**4.** Temperaturdetektionsvorrichtung (4) nach einem der Ansprüche 1 bis 3, ferner mit einer schwellenwertbasierten Abnormalitätsbestimmungseinheit (5), die zum Vergleichen einer ausgabesignalbasierten detektierten Temperatur, die eine Temperatur ist, die von der ausgabesignalbasierten Temperaturdetektionseinheit (5) detektiert wird, mit einer temperaturdetektionssignalbasierten detektierten Temperatur, die eine Temperatur ist, die von der temperaturdetektionssignalbasierten Temperaturdetektionseinheit (5) detektiert wird, und Bestimmen, dass eine Abnormalität in mindestens der Signalausgabeschaltung (5) oder dem Temperaturdetektionselement (3) auftritt, wenn ein Unterschied zwischen der ausgabesignalbasierten detektierten Temperatur und der temperaturdetektionssignalbasierten detektierten Temperatur größer oder gleich einem vorbestimmten Detektionstemperaturunterschiedsschwellenwert ist, ausgebildet ist.

5. Temperaturdetektionsvorrichtung (4) nach Anspruch 4, bei der die schwellenwertbasierte Abnormalitätsbestimmungseinheit (5) zum Bestimmen, dass eine Abnormalität in dem Temperaturdetektionselement (3) auftritt, wenn der Unterschied zwischen der ausgabesignalbasierten detektierten Temperatur und der temperaturdetektionssignalbasierten detektierten Temperatur größer oder gleich dem Detektionstemperaturunterschiedsschwellenwert ist, ausgebildet ist.

6. Temperaturdetektionsvorrichtung (4) nach einem der Ansprüche 2 bis 5, ferner mit einer Schutzbefehlausgabeeinheit (5), die zum Ausgeben eines Schutzbefehls, wenn die detektionstemperaturbasierte Abnormalitätsbestimmungseinheit (5) bestimmt, dass die Abnormalität auftritt, ausgebildet ist, wobei der Schutzbefehl mindestens einer von einem Befehl zum Schützen des Batteriepacks (1) durch Begrenzen oder Unterbrechen einer Entladung von dem Batteriepack (1) und einem Befehl zum Schützen des Batteriepacks (1) durch Begrenzen oder Unterbrechen eines Ladens des Batteriepacks (1) ist.

7. Temperaturdetektionsvorrichtung (4) nach einem der Ansprüche 3 bis 5, ferner mit einer Schutzbefehlausgabeeinheit (5), die zum Ausgeben eines Schutzbefehls, wenn die änderungsratenbasierte Abnormalitätsbestimmungseinheit (5) bestimmt, dass die Abnormalität auftritt, ausgebildet ist, wobei der Schutzbefehl mindestens einer von einem Befehl zum Schützen des Batteriepacks (1) durch Begrenzen oder Unterbrechen einer Entladung von dem Batteriepack (1) und einem Befehl zum Schützen des Batteriepacks (1) durch Begrenzen oder Unterbrechen eines Ladens des Batteriepacks (1) ist.

8. Temperaturdetektionsvorrichtung (4) nach Anspruch 4 oder 5, ferner mit einer Schutzbefehlausgabeeinheit (5), die zum Ausgeben eines Schutzbefehls, wenn die schwellenwertbasierte Abnormalitätsbestimmungseinheit (5) bestimmt, dass die Abnormalität auftritt, ausgebildet ist, wobei der Schutzbefehl mindestens einer von einem Befehl zum Schützen des Batteriepacks (1) durch Begrenzen oder Unterbrechen einer Entladung von dem Batteriepack (1) und einem Befehl zum Schützen des Batteriepacks (1) durch Begrenzen oder Unterbrechen eines Ladens des Batteriepacks (1) ist.

9. Temperaturdetektionsvorrichtung (4) nach einem der Ansprüche 1 bis 8, bei der das Ausgabesignal derart eingestellt ist, dass sich ein Ausgabepegel des Ausgabesignals zu einem vorbestimmten Zeitpunkt ändert, der sich in Abhängigkeit von der Umgebungstemperatur der Signalausgabeschaltung (6) ändert.

10. Temperaturdetektionsvorrichtung (4) nach Anspruch 9, bei der die Signalausgabeschaltung (6) zum Ausgeben mindestens eines vorbestimmten Pulssignals als das Ausgabesignal ausgebildet ist, bei der das Pulssignal eine Charakteristik aufweist, in der sich eine Pulsbreite des Pulssignals in Abhängigkeit von der Umgebungstemperatur der Signalausgabeschaltung (6) ändert, und bei der die ausgabesignalbasierte Temperaturdetektionseinheit (5) zum Detektieren der Temperatur im Inneren des Batteriepacks (1) basierend auf der Pulsbreite des Pulssignals ausgebildet ist.

11. Temperaturdetektionsvorrichtung (4) nach Anspruch 10, bei der die Signalausgabeschaltung (6) eine Takterzeugungsschaltung (18) aufweist, die zum Ausgeben eines Taktsignals mit einer vorbestimmten Frequenz ausgebildet ist, bei der die Signalausgabeschaltung (6) zum Ausgeben des Pulssignals zu einem Zeitpunkt, der mit dem Taktsignal von der Takterzeugungsschaltung (18) synchronisiert ist, ausgebildet ist, und bei der die Takterzeugungsschaltung (18) eine Charakteristik aufweist, in der sich die Frequenz des Taktsignals in Abhängigkeit von einer Temperatur der Takterzeugungsschaltung (18) ändert.

12. Batteriepack (1) für ein elektrisches Kraftwerkzeug, mit:

   einer Batterie (2) mit mindestens einer Batteriezelle (21 bis 30); und

   der Temperaturdetektionsvorrichtung (4) nach einem der Ansprüche 1 bis 11.

**Revendications**

1. Dispositif de détection de température (4) disposé dans un bloc-batterie (1) pour un outil électrique et configuré pour détecter une température à l'intérieur du bloc-batterie (1), le dispositif de détection de température comprenant :

   un circuit de sortie de signal (6, D2) configuré pour sortir un signal de sortie pour utilisation autre que pour indiquer une température ambiante de celui-ci, le signal de sortie étant un signal qui change un état du signal de sortie en fonction de la température ambiante ; une unité de détection de température (5) basée sur le signal de sortie configurée pour détecter la température à l'intérieur du bloc-batterie (1) sur la base de l'état du signal de sortie provenant du circuit de sortie de signal (6, D2) ; et

**caractérisé en ce qu'**il comprend également une unité de détection de température (5) basée sur le signal de détection de température qui inclut un élément de détection de température (3) adapté pour sortir un signal de détection de température indiquant une température ambiante de celui-ci, et qui est configurée pour détecter la température à l'intérieur du bloc-batterie (1) sur la base du signal de détection de température provenant de l'élément de détection de température (3).

2. Dispositif de détection de température (4) selon la revendication 1, comprenant en outre une unité de détection d'anomalie (5) basée sur la température détectée configurée pour déterminer qu'une anomalie se produit dans le bloc-batterie (1) quand il se produit au moins l'un parmi :

un cas dans lequel au moins une température parmi une température détectée sur la base du signal de sortie, qui est une température détectée par l'unité de détection de température (5) basée sur le signal de sortie, et une température détectée sur la base du signal de détection de température, qui est une température détectée par l'unité de détection de température (5) basée sur le signal de détection de température, est égale ou supérieure à une valeur de limite supérieure de température prédéterminée ; et
un cas dans lequel au moins une température parmi la température détectée sur la base du signal de sortie et la température détectée sur la base du signal de détection de température est égale ou inférieure à une valeur de limite inférieure de température prédéterminée qui est inférieure à la valeur de limite supérieure de température.

3. Dispositif de détection de température (4) selon la revendication 1 ou 2, comprenant en outre une unité de détermination d'anomalie (5) basée sur le rythme de changement configurée pour déterminer qu'une anomalie se produit dans le bloc-batterie (1) quand au moins un rythme de changement parmi un rythme de changement d'une température détectée sur la base du signal de sortie, qui est une température détectée par l'unité de détection de température (5) basée sur le signal de sortie, et un rythme de changement d'une température détectée sur la base du signal de détection de température, qui est une température détectée par l'unité de détection de température (5) basée sur le signal de détection de température, est égal ou supérieur à une valeur de limite supérieure de rythme de changement prédéterminée.

4. Dispositif de détection de température (4) selon l'une quelconque des revendications 1 à 3, comprenant en outre une unité de détermination d'anomalie (5) basée sur la valeur seuil configurée pour comparer une température détectée sur la base du signal de sortie, qui est une température détectée par l'unité de détection de température (5) basée sur le signal de sortie, à une température détectée sur la base du signal de détection de température, qui est une température détectée par l'unité de détection de température (5) basée sur le signal de détection de température, et déterminer qu'une anomalie se produit dans au moins l'un parmi le circuit de sortie de signal (5) et l'élément de détection de température (3) quand une différence entre la température détectée sur la base du signal de sortie et la température détectée sur la base du signal de détection de température est égale ou supérieure à une valeur seuil de différence de température détectée prédéterminée.

5. Dispositif de détection de température (4) selon la revendication 4, dans lequel l'unité de détermination d'anomalie (5) basée sur la valeur seuil est configurée pour déterminer qu'une anomalie se produit dans l'élément de détection de température (3) quand la différence entre la température détectée sur la base du signal de sortie et la température détectée sur la base du signal de détection de température est égale ou supérieure à la valeur seuil de différence de température détectée.

6. Dispositif de détection de température (4) selon l'une quelconque des revendications 2 à 5, comprenant en outre une unité de sortie (5) d'instruction de protection configurée pour sortir une instruction de protection quand l'unité de détermination d'anomalie (5) basée sur la température détectée détermine que l'anomalie se produit, l'instruction de protection étant au moins une instruction parmi une instruction pour protéger le bloc-batterie (1) en exécutant la limitation ou la suspension de décharge du bloc-batterie (1), et une instruction pour protéger le bloc-batterie (1) en exécutant la limitation ou la suspension de charge vers le bloc-batterie (1).

7. Dispositif de détection de température (4) selon l'une quelconque des revendications 3 à 5, comprenant en outre une unité de sortie (5) d'instruction de protection configurée pour sortir une instruction de protection quand l'unité de détermination d'anomalie (5) basée sur le rythme de changement détermine que l'anomalie se produit, l'instruction de protection étant au moins une instruction parmi une instruction pour protéger le bloc-batterie (1) en exécutant la limitation ou la suspension de décharge du bloc-batterie (1), et une instruction pour protéger le bloc-batterie (1) en exécutant la limitation ou la suspension de charge vers le bloc-batterie (1).

8. Dispositif de détection de température (4) selon la revendication 4 ou 5, comprenant en outre une unité de sortie (5) d'instruction de protection configurée pour sortir une instruction de protection quand l'unité de détermination d'anomalie (5) basée sur la valeur seuil détermine que l'anomalie se produit, l'instruction de protection étant au moins une instruction parmi une instruction pour protéger le bloc-batterie (1) en exécutant la limitation ou la suspension de décharge du bloc-batterie (1), et une instruction pour protéger le bloc-batterie (1) en exécutant la limitation ou la suspension de charge vers le bloc-batterie (1).

9. Dispositif de détection de température (4) selon l'une quelconque des revendications 1 à 8, dans lequel le signal de sortie est réglé de telle sorte qu'un niveau de sortie du signal de sortie change à un moment prédéterminé qui change en fonction de la température ambiante du circuit de sortie de signal (6).

10. Dispositif de détection de température (4) selon la revendication 9,
   dans lequel le circuit de sortie de signal (6) est configuré pour sortir au moins un signal d'impulsion prédéterminé comme signal de sortie,
   dans lequel le signal d'impulsion présente une caractéristique dans laquelle une largeur d'impulsion du signal d'impulsion change en fonction de la température ambiante du circuit de sortie de signal (6), et
   dans lequel l'unité de détection de température (5) basée sur le signal de sortie est configurée pour détecter la température à l'intérieur du bloc-batterie (1) sur la base de la largeur d'impulsion du signal d'impulsion.

11. Dispositif de détection de température (4) selon la revendication 10,
   dans lequel le circuit de sortie de signal (6) comprend un circuit de génération d'horloge (18) configuré pour sortir un signal d'horloge ayant une fréquence prédéterminée,
   dans lequel le circuit de sortie de signal (6) est configuré pour sortir le signal d'impulsion à un moment synchronisé sur le signal d'horloge provenant du circuit de génération d'horloge (18), et dans lequel le circuit de génération d'horloge (18) présente une caractéristique dans laquelle la fréquence du signal d'horloge change en fonction d'une température du circuit de génération d'horloge (18).

12. Bloc-batterie (1) pour un outil électrique comprenant :

   une batterie (2) ayant au moins une cellule de batterie (21 à 30) ; et

le dispositif de détection de température (4) selon l'une quelconque des revendications 1 à 11.

FIG. 1A

FIG.1B

FIG. 2

EP 2 587 584 B1

FIG. 3

FIG. 4A

FIG. 4B

FIG. 4C

FIG. 5A

RESET PULSE WIDTH Wp

LARGE

SMALL

LOW ⟶ HIGH

TEMPERATURE
(IC TEMPERATURE Tc)

FIG. 5B

THERMISTOR-DETECTION
VOLTAGE Vt
(INPUT TO MICROCOMPUTER
FROM THERMISTOR)

LARGE

SMALL

LOW ⟶ HIGH

TEMPERATURE
(THERMISTOR-DETECTION TEMPERATURE Tt)

FIG. 6

FIG. 7A

```
┌─────────────────┐
│      START      │
└─────────────────┘
```

MEASURE RESET PULSE WIDTH Wp — S110

CALCULATE IC TEMPERATURE Tc
CORRESPONDING TO MEASURED RESET PULSE WIDTH Wp — S120
BASED ON RESET PULSE WIDTH VS TEMPERATURE CHARACTERISTIC

OBTAIN THERMISTOR-DETECTION VOLTAGE Vt — S130

CALCULATE THERMISTOR-DETECTION TEMPERATURE Tt
CORRESPONDING TO OBTAINED THERMISTOR-DETECTION VOLTAGE Vt — S140
BASED ON THERMISTOR-DETECTION VOLTAGE VS TEMPERATURE
CHARACTERISTIC

CALCULATE MAXIMUM VALUE Tt_max AND MINIMUM VALUE Tt_min OF
THERMISTOR-DETECTION TEMPERATURE Tt — S150
BASED ON IC TEMPERATURE Tc

( 1 )

FIG. 7B

FIG. 8

FIG. 9A

START

OBTAIN THERMISTOR-DETECTION TEMPERATURE Tt
AND IC TEMPERATURE Tc — S310

S320

TEMPERATURE
UPPER-LIMIT VALUE
> Tt ?    NO

YES

S330

TEMPERATURE
LOWER-LIMIT VALUE
< Tt ?    NO

YES

SET FIRST TEMPERATURE
ABNORMALITY FLAG — S340

S350

TEMPERATURE
UPPER-LIMIT VALUE
> Tc ?    NO

YES

S360

TEMPERATURE
LOWER-LIMIT VALUE
< Tc ?    NO

YES

SET SECOND TEMPERATURE
ABNORMALITY FLAG — S370

CALCULATE CHANGE RATE $\Delta$ Tt
OF THERMISTOR-DETECTION TEMPERATURE Tt — S380

2

FIG. 9B

② 

CALCULATE CHANGE RATE $\Delta$Tc  
OF IC TEMPERATURE Tc ⟩ S390

S400 — CHANGE RATE  
UPPER-LIMIT VALUE  
> $\Delta$Tt ?

NO → S410  
SET THIRD TEMPERATURE  
ABNORMALITY FLAG

YES

S420 — CHANGE RATE  
UPPER-LIMIT VALUE  
> $\Delta$Tc ?

NO → S430  
SET FOURTH TEMPERATURE  
ABNORMALITY FLAG

YES

S440 — ANY OF  
ABNORMALITY FLAGS  
HAS BEEN SET ?

YES → S450  
CHARGING OR  
DISCHARGING? — CHARGING

NO

DISCHARGING

S460 —  
OUTPUT COMMAND  
TO SUSPEND (OR  
LIMIT) DISCHARGE

S470 —  
OUTPUT COMMAND  
TO SUSPEND (OR  
LIMIT) CHARGE

END

FIG. 10A

LARGE

DIODE VOLTAGE Vf
(INPUT TO MICRO-
COMPUTER FROM DIODE)

SMALL

LOW ⟶ HIGH

TEMPERATURE
(DIODE TEMPERATURE)

FIG. 10B

NUMERICAL VALUE,
WHICH IS RECOGNIZED
BY MICROCOMPUTER,
OF DIODE VOLTAGE Vf

55
50
45
40
35
30
25

-20 -10 0 10 20 30 40 50 60 70 80

DIODE TEMPERATURE [°C]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000278878 A
- JP 2001211559 A
- WO 2007104325 A1
- WO 2011004249 A2